Europäisches Patentamt

(19) European Patent Office

Office européen des brevets

(11) Veröffentlichungsnummer: **0 379 496 B1**

(12) # EUROPÄISCHE PATENTSCHRIFT

(45) Veröffentlichungstag der Patentschrift :
**21.11.91 Patentblatt 91/47**

(51) Int. Cl.⁵ : **F16B 7/04, E04B 1/19**

(21) Anmeldenummer : **88907235.1**

(22) Anmeldetag : **29.08.88**

(86) Internationale Anmeldenummer :
**PCT/DE88/00524**

(87) Internationale Veröffentlichungsnummer :
**WO 89/02539 23.03.89 Gazette 89/07**

(54) **ROHRVERBINDUNG ZUR BILDUNG EINES KNOTENPUNKTES.**

(30) Priorität : **11.09.87 DE 3730493**

(43) Veröffentlichungstag der Anmeldung :
**01.08.90 Patentblatt 90/31**

(45) Bekanntmachung des Hinweises auf die
Patenterteilung :
**21.11.91 Patentblatt 91/47**

(84) Benannte Vertragsstaaten :
**AT BE CH DE FR GB IT LI LU NL SE**

(56) Entgegenhaltungen :
**EP-A- 0 034 078**

(56) Entgegenhaltungen :
**EP-A- 0 157 993**
**WO-A-83/02633**
**DE-A- 2 950 742**
**DE-U- 8 703 940**

(73) Patentinhaber : **KREUSEL, Ulrich**
**Birkenstrasse 28**
**W-6537 Gensingen (DE)**

(72) Erfinder : **KREUSEL, Ulrich**
**Birkenstrasse 28**
**W-6537 Gensingen (DE)**

(74) Vertreter : **Becker, Bernd, Dipl.-Ing.**
**Hauptstrasse 10**
**W-6530 Bingen 17 (DE)**

EP 0 379 496 B1

## Beschreibung

Die Erfindung bezieht sich auf eine Rohrverbindung zur Bildung eines Knotenpunktes aus mehreren, mittig einen längsverlaufenden Kanal aufweisenden Rohren, bei der jedes Rohr mit einem von der Stirnseite her in den Kanal eingesetzten Anschlußteil versehen ist, das jeweils über eine aus zwei gegenüberliegenden, durch eine Schraubverbindung zusammengehaltenen Klemmbacken bestehende Klemmeinrichtung mit einem scheibenförmigen, einen Ansatz aufweisenden Verbinderelement gekoppelt ist.

Aus der DE-U 8 703 940 ist bereits eine Gelenkverbindung für den stirnseitigen Anschluß von mindestens zwei Rohren bekannt, die aus einem an dem einen Rohr befestigten Gelenkkopf und einer an dem Gelenkkopf angelenkten, feststellbaren Halterung für das andere Rohr besteht. Jedes Rohr weist mittig einen längsverlaufenden Kanal auf, in den von der Stirnseite her ein Anschlußteil eingesetzt ist. Der Gelenkkopf umfaßt zwei über zwei Schraubverbindungen gekoppelte Kugelhalbschalen mit angeformten, das Anschlußteil an dem einen Rohr umgreifenden Klemmbacken. Die Halterung ist aus einer zwischen den Kugelhalbschalen drehbeweglich gehalterten Scheibe mit peripher eingesetztem Anschlußteil und einer dieses Anschlußteil mit dem Anschlußteil des anderen Rohres verbindenden Klemmeinrichtung, die aus zwei gegenüberliegenden, durch eine Schraubverbindung zusammengehaltenen Klemmbacken besteht, zusammengesetzt. Zwar lassen sich bei einer solchen Gelenkverbindung, wenn lediglich zwei Rohre miteinander gekoppelt sind, diese beiden Rohre unter einem beliebigen Winkel zueinander verstellen, jedoch sind hierfür zum einen unterschiedliche Klemmeinrichtungen und zum anderen eine weitere Schraubverbindung für die drehbewegliche Aufnahme der Scheibe in der einen Klemmeinrichtung erforderlich, was insgesamt relativ aufwendig ist. Sind dagegen mehrere Rohre an der Scheibe der Gelenkverbindung befestigt, so haben diese Rohre aufgrund ihrer diskreten Ansatzpunkte eine bestimmte, nicht veränderbare Winkelstellung zueinander und können nur gemeinsam in ihrer Position zu dem Rohr, das mit der die Scheibe aufnehmenden Klemmeinrichtung verbunden ist, verändert werden.

Der Erfindung liegt die Aufgabe zugrunde, eine Rohrverbindung der eingangsgenannten Art zu schaffen, die konstruktiv einfach aufgebaut, für beliebige Winkelabgänge verwendbar und gleichzeitig sicher feststellbar und leicht lösbar ist.

Diese Aufgabe wird erfindungsgemäß dadurch gelöst, daß sich der Ansatz über den Umfang des Verbinderelementes erstreckt, und sämtliche Klemmeinrichtungen an den Ansatz angreifen.

Durch die erfindungsgemäße Ausbildung der aus wenigen, einfach aufgebauten, für die einzelnen Rohranschlüsse identischen Einzelteilen zusammengesetzten Rohrverbindung lassen sich problemlos die verschiedensten Rohrverbindungsformen, d.h. die verschiedensten Winkelstellungen zwischen mehreren stirnseitig verbundenen Rohren, herstellen, da lediglich nach dem Einsatzen der Anschlußteile in die Rohre und dem Einsetzen der Klemmeinrichtungen zwischen diese Anschlußteile und dem umlaufenden peripheren Ansatz des Verbinderelementes die Rohre in die gewünschte Winkelstellung zueinander zu bringen und anschließend die Schraubverbindungen der Klemmeinrichtungen anzuziehen sind, wodurch die Rohre fest an der Stirnseite der Klemmbacken der zugehörigen Klemmeinrichtung und die Innenseiten der Klemmbacken der Klemmeinrichtung fest an dem umlaufenden, peripheren Ansatz des Verbinderelementes zur Anlage kommen. Zur Verstellung der Rohrverbindung sind die Schraubverbindungen der Klemmeinrichtungen nur soweit zu lösen, bis die Klemmeinrichtungen auf dem umlaufenden peripheren Ansatz des Verbinderelementes in die neue gewünschte Position verschwenkt werden können, und dann sind die Schraubverbindungen wieder anzuziehen. Sämtliche Rohre können also unabhängig voneinander in der Winkelstellung zueinander verändert werden.

Bei einer Weiterbildung des Erfindungsgegenstandes ist das Verbinderelement als scheibenförmiges Halbkreisverbinderelement ausgebildet. Ein derartiges Verbinderelement läßt sich mit seiner geraden Seite in vorteilhafter Weise an einer Wand, einem Rohr oder dergleichen anbringen.

Nach einer vorteilhaften Ausgestaltung der Erfindung ist vorgesehen, daß das freie Ende des Anschlußteils mit zwei übereinanderliegenden, umlaufenden Rastnasen versehen ist, die in entsprechend geformte, umlaufende Nuten in den gegenüberliegenden Innenseiten der Klemmbacken der Klemmeinrichtung eingreifen, daß der kreisbogenförmige Ansatz des Halbkreis- bzw. Vollkreisverbinderelementes auf jeder Längsseite mit einer aus zwei Zähnen bestehenden, durchgehenden Verzahnung versehen ist, die in entsprechende, durchgehende Ausformungen in den Innenseiten der Klemmbacken der Klemmeinrichtung eingreifen, und daß die Klemmbacken der Klemmeinrichtung mit dem Anschlußteil und dem Ansatz des Halkbkreis- bzw. Vollkreisverbinderelementes durch die Schraubenverbindung verspannbar sind. Durch diese konstruktiven Merkmale wird eine besonders hoch belastbare Verbindung zwischen dem Rohr und dem Verbinderelement erreicht. Darüber hinaus ergibt sich durch die runde Ausführung der Rastnasen und der zugehörigen Nuten die Möglichkeit, das Rohr im nichtangezogenen Zustand der Klemmeinrichtung relativ zu der Klemmeinrichtung zu verdrehen.

In weiterer Ausgestaltung des Erfindungsgegenstandes sind die Rastnasen des Anschlußteils im Querschnitt kegelstumpfförmig ausgebildet und an ihrer Breitseite jeweils mit einer schräg verlaufenden Hinterschneidung versehen, die hinter einen entsprechenden Absatz der zugehörigen, umlaufenden Nut in den Klemmbacken der Klemmeinrichtung eingreifen. Dadurch wird zum einen der Verbindungsvorgang erleichtert und zum anderen die Klemmfläche erhöht. Der Schrägverlauf der Hinterschneidung jeder Rastnase dient dem Toleranzausgleich.

Zur weiteren Erhöhung der Klemmfläche sowie zur weiteren Erleichterung des Verbindungsvorganges geht die Hinterschneidung der innenliegenden Rastnase des Anschlußteils in einen kegelstumpfförmigen Steckbereich über, wobei in die Innenseite der Klemmbacken der Klemmeinrichtung eine dementsprechend kegelstumpfförmig ausgeführte Einsteck-Öffnung eingelassen ist.

Zum Zwecke einer einfachen Verbindung zwischen dem Anschlußteil und dem Rohr geht bevorzugt der Steckbereich des Anschlußteils mittig unter Bildung einer umlaufenden Schulter, die an der Stirnseite des Kanals des Rohres anliegt, in einen in den Kanal des Rohrs eingreifenden Gewindezapfen über. Zweckmäßigerweise ist der Gewindezapfen des Anschlußteils mit einem selbstschneidenden Gewinde versehen, und in die Stirnseite der außenliegenden Rastnase des Anschlußteils ist ein Innensechskant-Sackloch für die Aufnahme eines entsprechenden Innensechskant-Schlüssels eingelassen.

Um eine möglichst latzsparende Anordnung der Klemmeinrichtung zu ermöglichen, umfaßt die Klemmeinrichtung einen zylindrischen Bereich, dessen Stirnseite an der Stirnseite der Wandung des Rohres anliegt, und einen konischen Bereich, dessen Stirnseite unter kreisbogenförmiger Ausgestaltung an der Außenseite des Halbkreis- bzw. Vollkreisverbinderelementes anliegt. Zweckmäßigerweise besteht die sich durch den zylindrischen Bereich der Klemmeinrichtung erstreckenden Schraubverbindung der beiden Klemmbacken aus einer Innensechskantschraube, deren Kopf sich in einer Schraubenkopfaufnahme der einen Klemmbacke abstützt und deren Gewindezapfen in eine Gewindebohrung der anderen Klemmbacke eingreift. Zur Montageerleichterung ist auf dem zwischen Schraubenkopf und Gewindezapfen vorgesehenen Schaft der Innensechskantschraube lose eine Haltescheibe angeordnet, die in eine entsprechende Aussparung in der Innenseite der den Gewindezapfen aufnehmenden Klemmbacke eingreift.

Zur Erhöhung der Kraftübertragung ist der Ansatz des Halbkreis-bzw. Vollkreisverbinderelementes von der Außenseite desselben her bis zu seiner Verzahnung mit einem im Querschnitt konusförmigen Steckbereich versehen, dem eine entsprechend geformte, konusförmige Einsteköffnung in den Innenseiten der Klemmbacken der Klemmeinrichtung zugeordnet ist. Weiterhin ist bevorzugt das Halbkreis- bzw. Vollkreisverbinderelement auf seinen Seitenflächen mit unter 45° zueinander verlaufenden Markierungsnuten versehen. Diese Markierungsnuten erleichtern die übliche Winkeleinstellung zwischen den zu verbindenden Rohren.

Damit neben der stirnseitigen Verbindung der Rohre auch ein längsseitiger Anschluß an ein Rohr möglich ist, besitzt nach einer vorteilhaften Weiterbildung der erfindungsgemäßen Lösung das Halbkreisverbinderelement an seiner geraden Seite endseitig schwalbenschwanzförmige Füße, die in eine dazu korrespondierend ausgebildete Längsnut eines mit einem mittigen Kanal versehenen Rohres eingreifen, wobei das Halbkreisverbinderelement mittels sich durch die Füße und den Ansatz erstreckender Madenschrauben mit dem Rohr verspannt ist. Zweckmäßigerweise ist die Längsnut des Rohres zwischen zwei von drei Stegen, die den mittigen Kanal des Rohres in seiner Lage halten, ausgebildet. Damit mehrere längsseitige Rohranschlüsse an dem Rohr vorgenommen werden können, ist bei einer alternativen Ausführung des Rohres der mittige Kanal durch vier um 90° zueinander versetzt angeordnete Stege in seiner Position gehalten, und das Rohr ist mit zwei gegenüberliegenden oder mit zwei um 90° zueinander versetzt liegenden oder mit drei oder vier zueinander um 90° versetzt angeordneten Längsnuten versehen. Zur weiteren Erhöhung der längsseitigen Rohranschlüsse ist das Rohr als Doppelmantel-Rohr ausgeführt, bei dem sich zwischen dem mittigen Kanal und dem inneren Mantel vier gleichmäßig über den Umfang verteilte Stege und zwischen dem inneren Mantel und dem äußeren Mantel acht gleichmäßig über den Umfang verteilte Stege erstrecken, wobei in den äußeren Mantel zwischen den diesen tragenden Stegen jeweils eine schwalbenschwanzförmige Längsnut eingelassen ist. Zweckmäßigerweise ist in den Boden jeder Längsnut mittig zu dem Öffnungsspalt der Längsnut eine längsverlaufende Rille eingelassen, in die die Smpitzen der Madenschrauben des Halbkreisverbinderelementes eingreifen.

Um in der Ebene des Halbkreisverbinderelementes neben den von diesem getragenen Rohranschlüssen einen weiteren Rohranschluß zu ermöglichen, weist nach einer weiteren vorteilhaften Ausgestaltung der Erfindung das Halbkreisverbinderelement an seiner geraden Seite mittig eine Aussparung auf, durch die eine das Rohr, das über seine Längsnut mit dem Halbkreisverbinderelement verspannt ist, umgreifende Rohrschelle hindurchgeführt ist, wobei die Rohrschellen-Hälften einstückig in durch eine Schraubverbindung gekoppelte Klemmbacken übergehen, deren gegenüberliegende Innenseiten endseitig mit entsprechend umlaufenden Nuten für die Aufnahme eines stirnseitig in den mittigen Kanal eines weiteren Rohres eingesetzten Anschlußteils versehen sind.

Bei einer alternativen Ausführung der Rohrschelle besitzt diese zwei gegenüberliegende, jeweils durch eine Schraubverbindung gekoppelte Klemmbackenpaare für den jeweils stirnseitigen Anschluß eines Rohres. Hierdurch können zwei zusätzlichte, gegenüberliegende Rohre in der Ebene des Halbkreisverbinderelementes an der Längsseite eines Rohres angeschlossen werden. Bei einer anderen Alternativausführung der Rohrschelle umfaßt diese drei um 90° zueinander versetzt angeordnete, jeweils durch eine Schraubverbindung gekoppelte Klemmbacken-Paare für den jeweils stirnseitigen Anschluß eines Rohres. Dies ermöglicht den zusätzlichen Anschluß von drei Rohren in der Ebene des Halbkreisverbinderelementes. Eine andere Möglichkeit der Erhöhung der Rohranschlüsse in der Ebene des Halbkreisverbinderelementes besteht darin, daß in die bogenförmige Außenseite der Rohrschelle mittig ein Anschlußteil eingesetzt ist, das über eine Klemmeinrichtung mit dem stirnseitig in dem mittigen Kanal eines weiteren Rohres eingesetzen Anschlußteil verbunden ist.

Bei einer weiteren vorteilhaften Ausführungsform des Erfindungsgegenstandes sind die Seitenflächen des Vollkreisverbinderelementes ballig ausgeführt und mit einer oder mehreren, zum Mittelpunkt des Vollkreisverbinderelementes hin gerichteten Gewindebohrungen versehen, in die Anschlußteile eingesetzt sind, die jeweils über eine Klemmeinrichtung mit einem stirnseitig in den mittigen Kanal eines weiteren Rohres eingesetzten Anschlußteils verbunden sind. Dies ermöglicht es, neben den in einer Ebene liegenden Rohranschlüssen am umlaufenden Ansatz des Vollkreisverbinderelementes weitere Rohranschlüsse winkelversetzt zu diesen Rohranschlüssen an dem Vollkreisverbinderelement anzubringen. Zur Steigerung der Kraftübertragung weisen bevorzugt die in die Seitenflächen des Vollkreisverbinderelementes eingesetzten Anschlußteile zwischen dem Steckbereich und dem Gewindezapfen eine Konus auf, der in eine entsprechende Senkung der zugehörigen Gewindebohrung des Vollkreisverbinderelementes eingreift. Zweckmäßigerweise sind die nicht benötigten Gewindebohrungen des Vollkreisverbinderelementes durch einen Blindstopfen verschlossen.

Der der Erfindung zugrundeliegende Gedanke wird in der nachfolgenden Beschreibung anhand mehrerer Ausführungsbeispiele, die in der Zeichnung dargestellt sind, näher erläutert. Es zeigt:

Fig. 1 den Anschluß eines erfindungsgemäßen Halbkreisverbinderelementes an der Längsseite eines Rohres, teilweise im Schnitt,

Fig. 2 einen Schnitt durch die Darstellung nach Fig. 1 gemäß der Linie II-II,

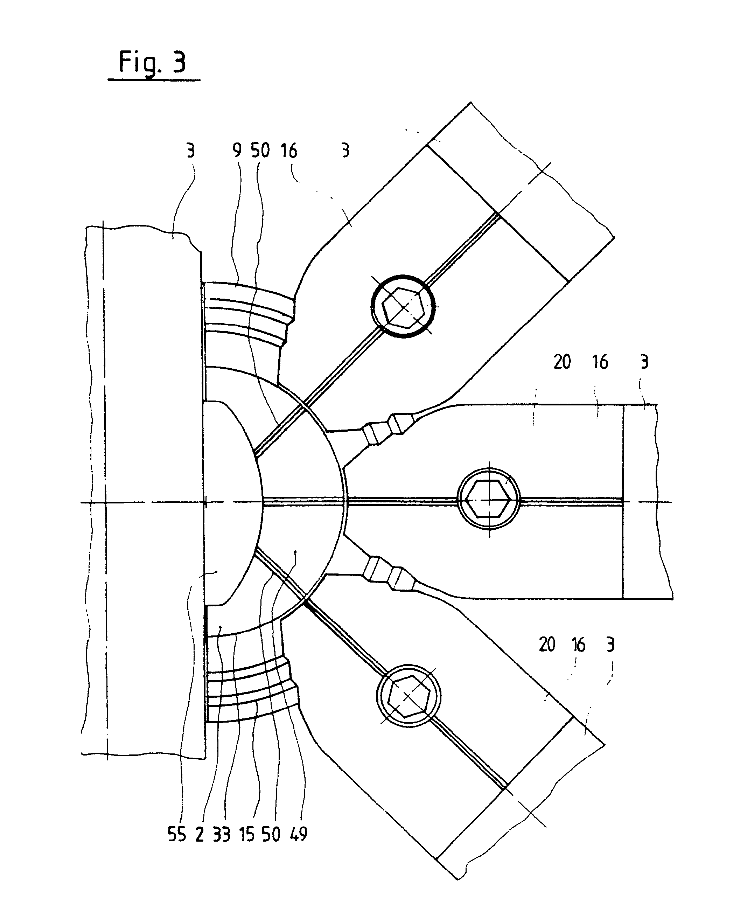

Fig. 3 eine Darstellung der Figur 1 mit mehreren Rohranschlüssen an dem Halbkreisverbinderelement,

Fig. 4 einen Querschnitt durch ein erfindungsgemäßes Vollkreisverbinderelement mit zwei möglichen Rohranschlüssen,

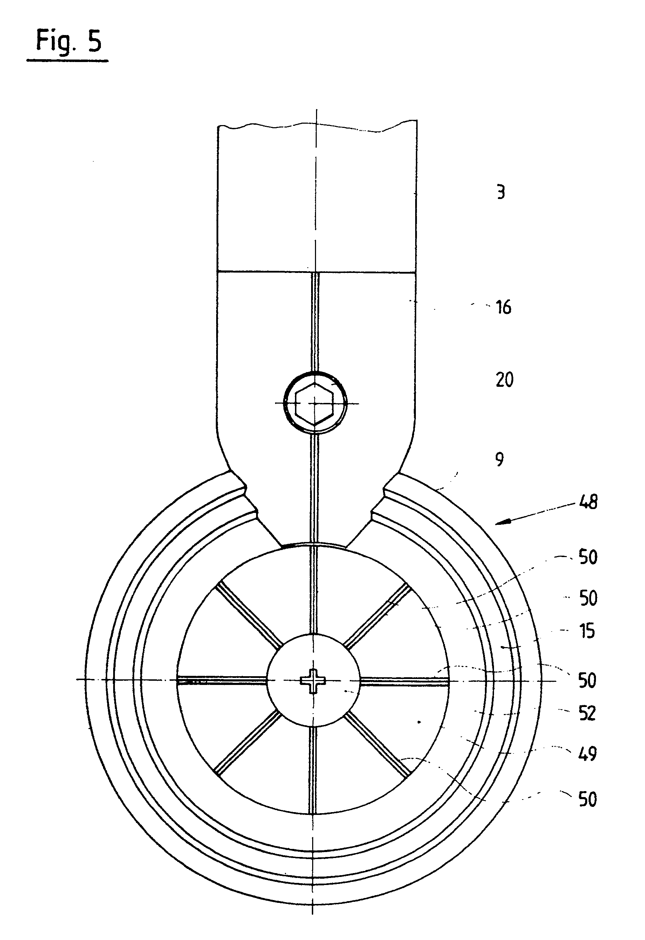

Fig. 5 eine Ansicht auf die Darstellung nach Fig. 4 in Richtung des Pfeiles V,

Fig. 6 einen Querschnitt durch das Vollkreisverbinderelement mit drei möglichen, zusätzlichen Rohranschlüssen,

Fig. 7 eine Ansicht des an der Längsseite eines Rohres angebrachten Halbkreisverbinderelementes mit einem zusätzlichen Rohranschluß in der Ebene des Halbkreisverbinderelementes,

Fig. 8 einen Schnitt durch die Darstellung nach Fig. 7 gemäß der Linie VIII-VIII,

Fig. 9 eine Ansicht des an der Längsseite eines Rohres befestigten Halbkreisverbinderelementes mit zwei susätzlichen, gegenüberliegenden Rohranschlüssen in der Ebene des Halbkreisverbinderelementes,

Fig 10 einen Schnitt durch die Darstellung nach Fig. 9 gemäß der Linie X-X,

Fig. 11 eine Ansicht des an der Längsseite eines Rohres befestigten Halbkreisverbinderelementes mit drei zusätzlichen, in der Ebene des Halbkreisverbinderelementes liegenden Rohranschlüssen, teilweise im Schnitt,

Fig. 12 einen Schnitt durch eine alternative Ausführungsform der Darstellung nach Fig. 11,

Fig. 13 bis 18 Querschnittsdarstellungen unterschiedlich gestalteter Rohre für den Anschluß von Halbkreis- und Vollkreisverbinderelementen,

Fig. 19 eine Ansicht eines mit Hilfe von Halbkreisverbinderelementen hergestellten Rohr-Gitterwerkes,

Fig. 20 eine Ansicht eines mit Hilfe von Halbkreisverbindern hergestellten, zeltartigen Rohr-Gitterwerkes,

Fig. 21 eine Ansicht der Rohr-Gitterwerkes nach Fig. 20 in Richtung des Pfeiles XXI,

Fig. 22 eine Ansicht eines mit Hilfe der Halbkreis- und Vollkreisverbinderelemente hergestellten DachstuhlRohr-Gitterwerkes,

Fig. 23 einen Schnitt durch das Gitterwerk nach Fig. 22 in Richtung der Linie XXIII-XXIII,

Fig. 24 eine Darstellung eines mit Hilfe von Halbkreisverbinderelementen hergestellten Treppengeländers,

Fig. 25 eine Darstellung der längsseitigen Verbindung zweier Rohre mit Hilfe zweier über zwei Klemmeinrichtungen gekoppelter Halbkreisverbinderelemente,

Fig. 26 eine winkelige Stoßverbindung zweier Rohre, bei der die in die Längsseiten der Rohre eingesetzten Halbkreisverbinderelemente durch eine entsprechend ausgebildete Klemmeinrichtung verbunden sind, und

Fig. 27 eine Darstellung der stirnseitigen und längsseitigen Anschlüsse von Rohren an ein Vollkreisverbinderelement.

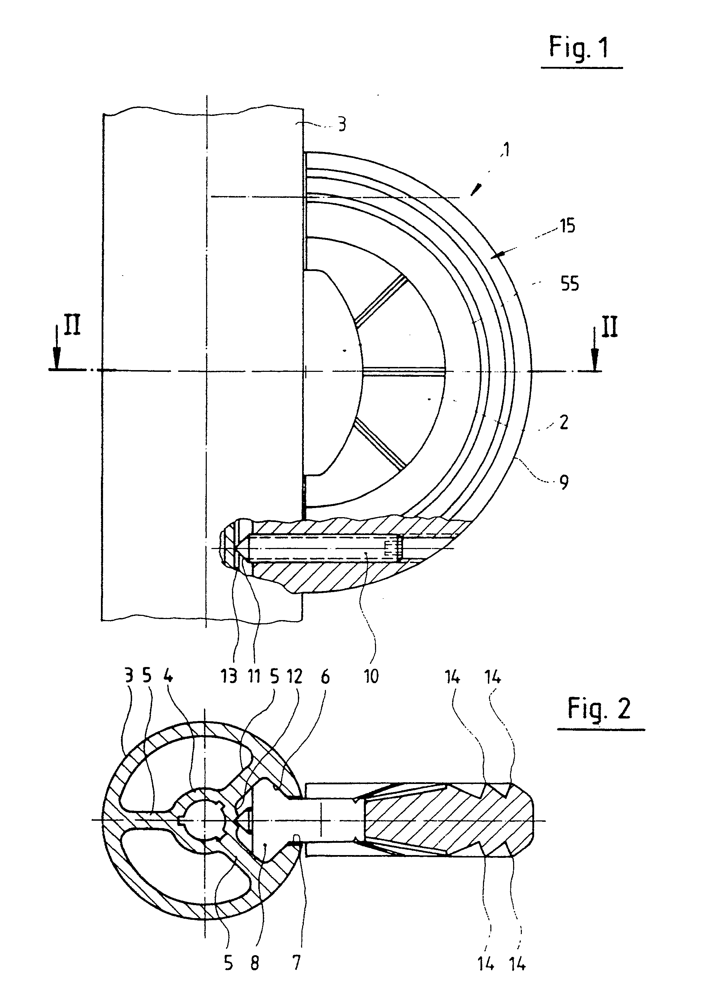

Das in Fig. 1 dargestellte Verbinderelement 1 ist als Halbkreisverbinderelement 2 ausgeführt und an der Längsseite eines Rohres 3 befestigt. Das Rohr 3 besitzt mittig einen längsverlaufenden Kanal 4, der über drei Stege 5 in seiner Position gehalten ist. Zwischen zwei benachbarten Stegen 5 befindet sich in dem Rohr 3 eine schwalbenschwanzförmige Längsnut 6 mit dem Öffnungsspalt 7. In die Längsnut 6 sind von der Stirnseite des Rohres 3 her zwei zu dem Halbkreisverbinderelement 2 gehörende, entsprechend schwalbenschwanzförmig ausgebildete Füße 8 eingeschoben, die jeweils endseitig an der geraden Seite des Halbkreisverbinderelementes 2 angeordnet sind. Zur Befestigung des Halbkreisverbinderelementes 2 in der gewünschten Lage an dem Rohr 3 dienen sich durch die Füße 8 und einen peripheren Ansatz 9 des Halbkreisverbinderelementes 2 erstreckende Madenschrauben 10. Hierbei greifen die Spitzen 11 der Madenschrauben 10 in eine in den Boden 12 der Längsnut 6 eingelassenen, längsverlaufenden Rille 13 ein.

Der kreisbogenförmige Ansatz 9 des Halbkreisverbinderelementes 2 ist auf jeder Längsseite mit einer aus zwei Zähnen 14 bestehenden Verzahnung 15 versehen, an die über eine oder mehrere Klemmeinrichtungen 16 eine entsprechende Anzahl Rohre 3 mit oder ohne Längsnut 6 stirnseitig angeschlossen sind, wobei in jedes Rohr 3 stirnseitig ein mit der zugehörigen Klemmeinrichtung 16 zusammenwirkendes Anschlußteil 17 eingesetzt ist.

Das freie Ende eines jeden Anschlußteils 17 ist mit zwei übereinanderliegenden, umlaufenden Rastnasen 18 versehen, die in entsprechend geformte, umlaufende Nuten 19 in den gegenüberliegenden Innenseiten der durch eine Schraubverbindung 20 gekoppelten Klemmbacken 21, 22 der Klemmeinrichtung 16 eingreifen. An ihrer Breitseite besitzt jede im Querschnitt kegelstumpfförmig ausgebildete Rastnase 18 eine schräg verlaufende Hinterschneidung 23, die hinter einen entsprechenden Absatz 24 der zugehörigen, umlaufenden Nut 19 in den Klemmbacken 21, 22 der Klemmeinrichtung 16 eingreift. An die Hinterschneidung 23 der innenliegenden Rastnase 18 schließt sich ein kegelstumpfförmiger Steckbereich 25 an, der in eine entsprechend kegelstumpfförmig ausgebildete Einsteck-Öffnung 26 in den Innenseiten der Klemmbacken 21, 22 der Klemmeinrichtung 16 eingreift. An den Steckbereich 25 des Anschlußteils 17 schließt sich mittig unter Bildung einer umlaufenden Schulter 27, die an der Stirnseite des mittigen Kanals 4 des Rohres 3 anliegt, ein Gewindezapfen 28 an, welcher in eine zugehörige Gewindebohrung 29 im Kanal 4 eingedreht ist. Der Gewindezapfen 28 kann auch mit einem selbstschneidenden Gewinde versehen sein, wodurch die Anbringung der Gewindebohrung 29 entfällt. In der Stirnseite der außenliegenden Rastnase 18 befindet sich ein Innensechskant-Sackloch 30 zur Aufnahme eines entsprechenden Schraubenschlüssels.

Die Klemmeinrichtung 16 weist einen zylindrischen Bereich 31, durch den sich die Schraubverbindung 20 erstreckt, und einen konischen, dem Halbkreisverbinderelement 2 zugewandten Bereich 32 auf. Die Stirnseite des konischen Bereiches 32 der Klemmeinrichtung 16 liegt unter kreisbogenförmiger Ausgestaltung an der Außenseite 33 des Halbkreisverbinderelementes 16 an, während die Stirnseite des zylindrischen Bereiches 31 der Klemmeinrichtung 16 an der Stirnseite der Wandung des Rohres 3 anliegt. In die Innenseiten der Klemmbacken 21, 22 der Klemmeinrichtung 16 sind im konischen Bereich 32 mit den Zähnen 14 der Verzahnungen 15 des Ansatzes 9 des Halbkreisverbinderelementes 2 korrespondierende, durchgehende Ausformungen 34 eingelassen. Der Ansatz 9 des Halbkreisverbinderelementes 9 besitzt zwischen seinen Verzahnungen 15 und der Außenseite 33 des Halbkreisverbinderelementes 2 einen im Querschnitt konusförmigen Steckbereich 35, dem eine entsprechend geformte, konusförmige Einsteck-Öffnung 36 in den Innenseiten der Klemmbacken 21, 22 der Klemmeinrichtung 16 zugeordnet ist.

Die Schraubverbindung 20 der Klemmeinrichtung 16 besteht aus einer Innensechskantschraube 37. Die Klemmbacke 21 weist eine Schraubenkopfaufnahme 38, an deren Schulter 39 sich der Kopf 40 der Schraube 37 abstützt, sowie eine im Durchmesser entsprechend kleinere Durchgangsbohrung 41 für den Schaft 42 der Schraube 37 auf. Die andere Klemmbacke 22 besitzt eine Gewindebohrung 43 für die Aufnahme des sich an den Schaft 42 der Schraube 37 anschließenden Gewindezapfen 44. Auf dem Schaft 42 der Schraube 37 ist lose eine Haltescheibe 45 angeordnet, die in eine entsprechende Aussparung 46 in der Innenseite der Klemmbacke 22 eingreift. Die Klemmbacken 21, 22 sind so ausgebildet, daß im montierten Zustand der Klemmeinrichtung 16 bei angezogener Schraubverbindung 20 ein schmaler Spalt 47 zwischen den einander zugewandten Innenseiten der Klemmbacken 21, 22 verbleibt.

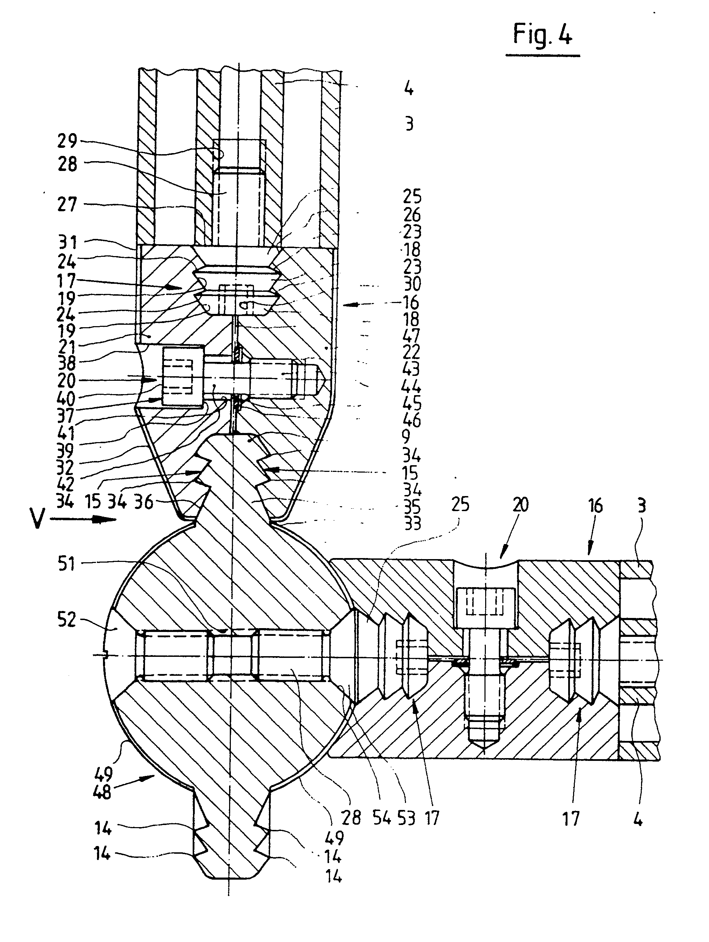

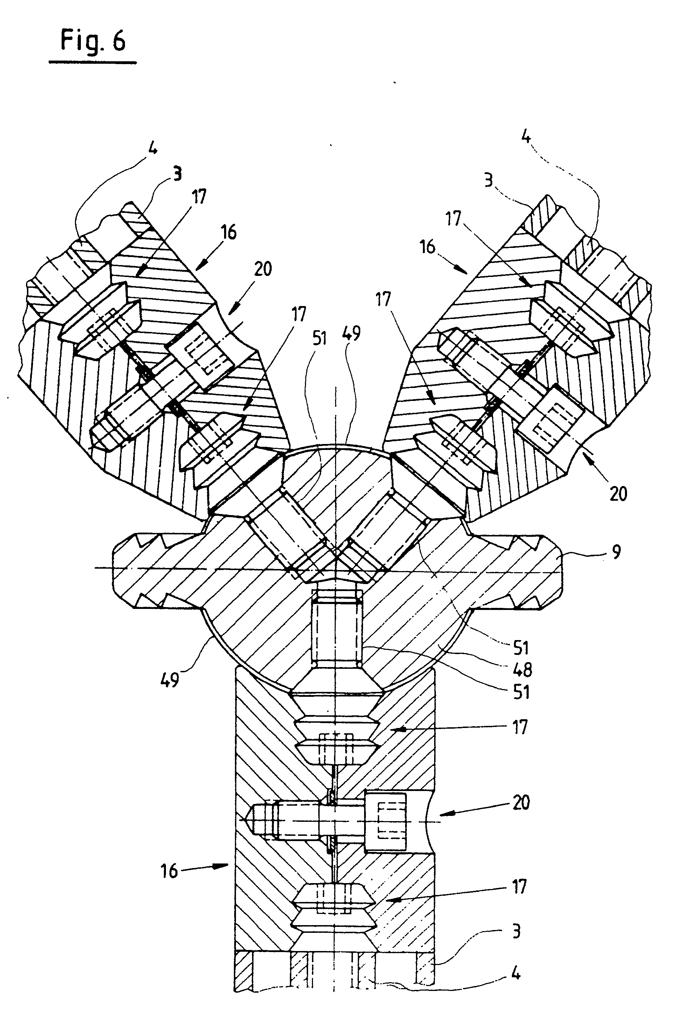

Das in Fig. 4 dargestellte Vollkreisverbinderelement 48 ist analog dem Halbkreisverbinderelement 2 ausgeführt, d.h. anstelle der Füße 8 des Halbkreisverbinderelementes 2 besitzt das Vollkreisverbinderelement 48 einen um 360° umlaufenden Ansatz 9, an den in der vorhergehend beschriebenen Weise mittels Klemmeinrichtungen 16 und Anschlußteilen 9 Rohre 3 im beliebigen Winkel zueinander befestigbar sind. Zur Erleichterung der üblichen Winkelstellungen der Rohre 3 zueinander sind auf den Seitenflächen des Halbkreis-2 und des Vollkreisverbinderelementes 48 zueinander unter 45° verlaufende Markierungsnuten 50 angebracht. Die Seitenflächen 49 des Vollkreisverbinderelementes 48 sind ballig ausgeführt und mit einer rechtwinklig zu dem Ansatz 9 durchgehend verlaufenden mittigen Gewindebohrung 51 versehen. In die Gewindebohrung 51 ist von der einen Seite her ein mit der Seitenfläche 49 abschließender Blindstopfen 52 und von der anderen Seite her ein Anschlußteil 17 eingedreht. Dieses Anschlußteil 17 weist zwischen seinem Steckbereich 25 und dem Gewindezapfen 28 einen Konus 53 auf, der in eine entsprechende Senkung 54 der Gewindebohrung 51 eingreift. Dieses Anschlußteil 17 ist über eine insgesamt zylinderförmig ausgeführte Klemmeinrichtung 16, deren der Seitenfläche 49 des Vollkreisverbinderelementes 48 zugewandte Stirnseite der Form dieser Seitenfläche 49 angepaßt ist, mit einem stirnseitig in den mittigen Kanal 4 eines weiteren Rohres 3 eingesetzen Anschlußteils 17 verbunden. Selbstverständlich ist es auch möglich, wie in Fig. 6 dargestellt, mehrere Gewindebohrungen 51 unter bestimmter Winkelanordnung zueinander in den Seitenflächen 49 des Vollkreisverbinderelementes anzubringen, in diese Gewindebohrungen die entsprechenden Anschlußteile 17 einzudrehen und diese Anschlußteile 17 über entsprechend gestaltete Klemmeinrichtungen 16 mit stirnseitig in Rohre 3 eingesetzten Anschlußteilen 17 zu verbinden.

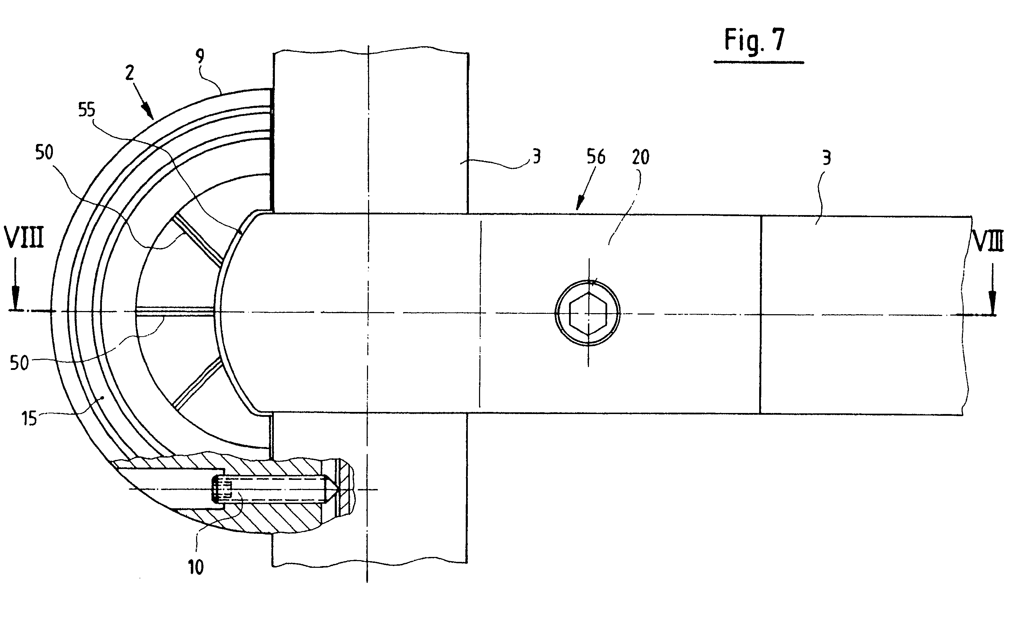

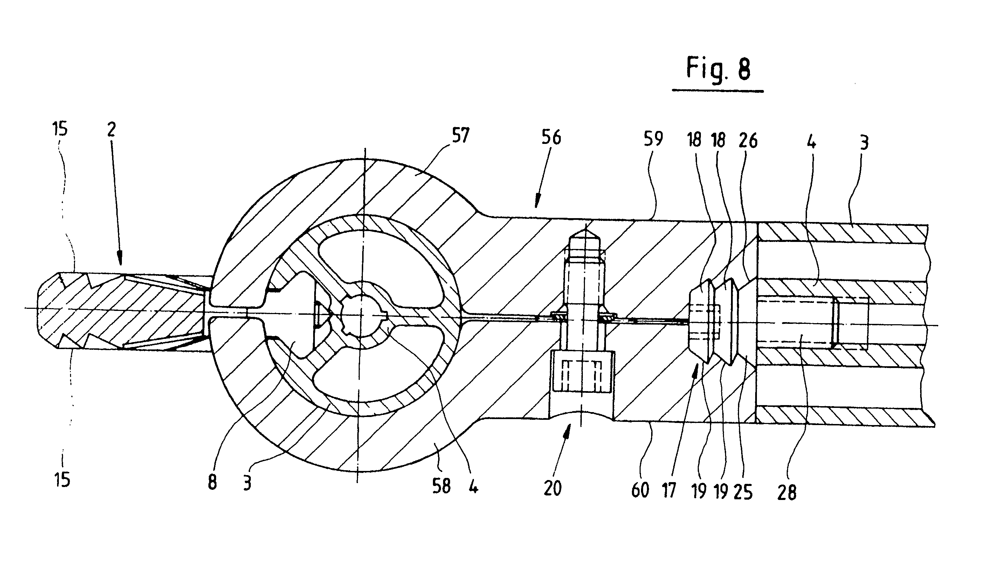

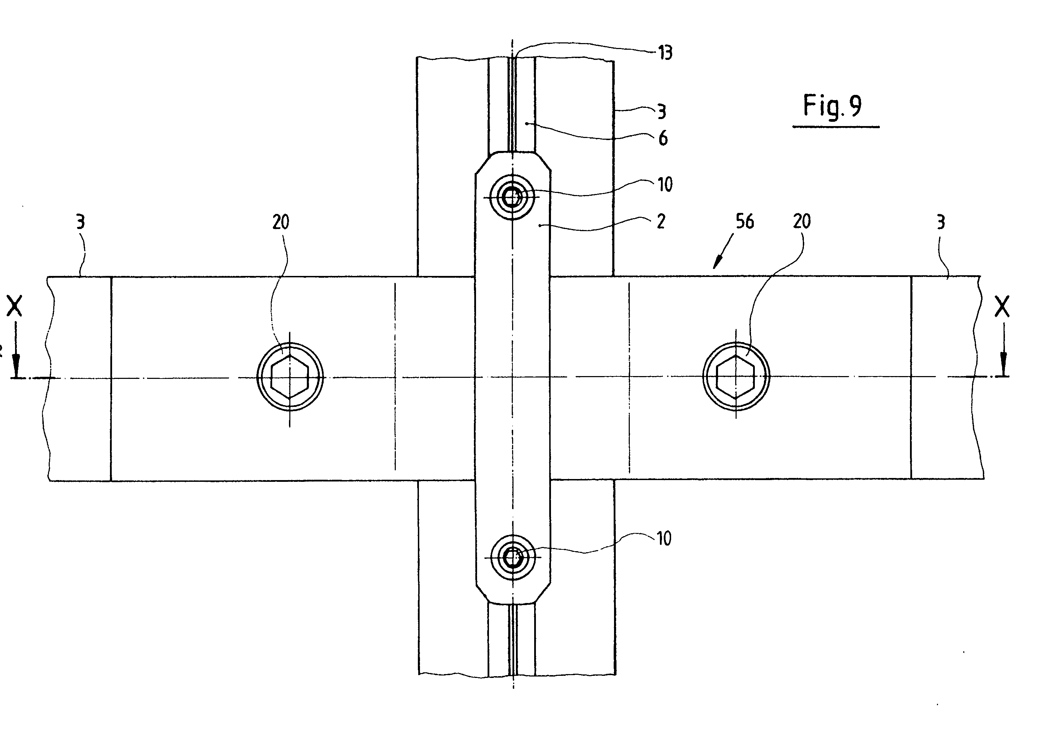

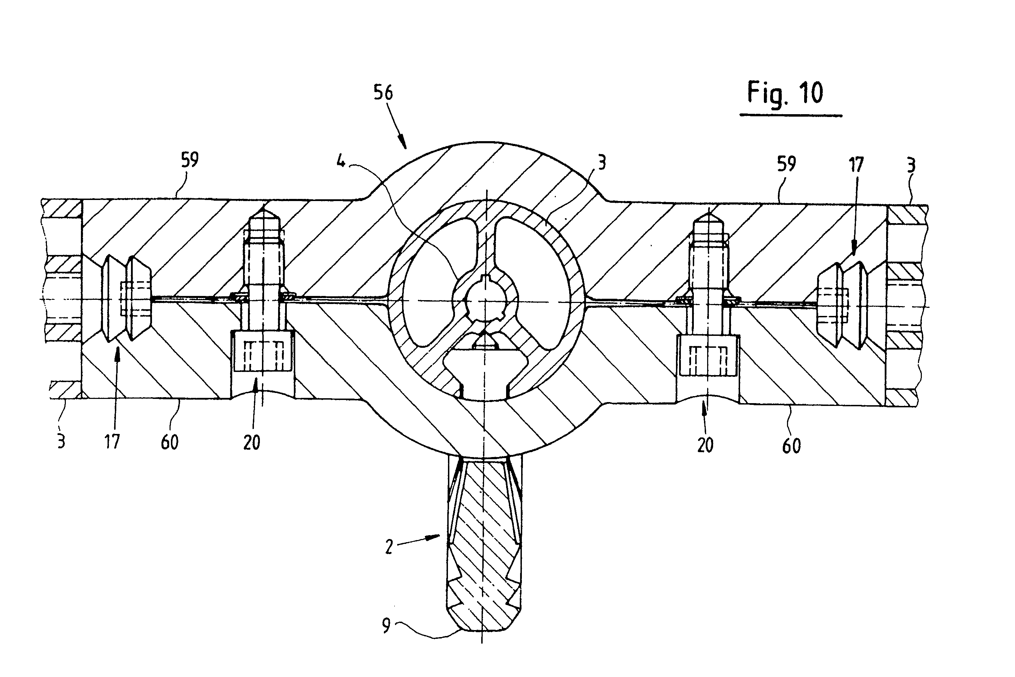

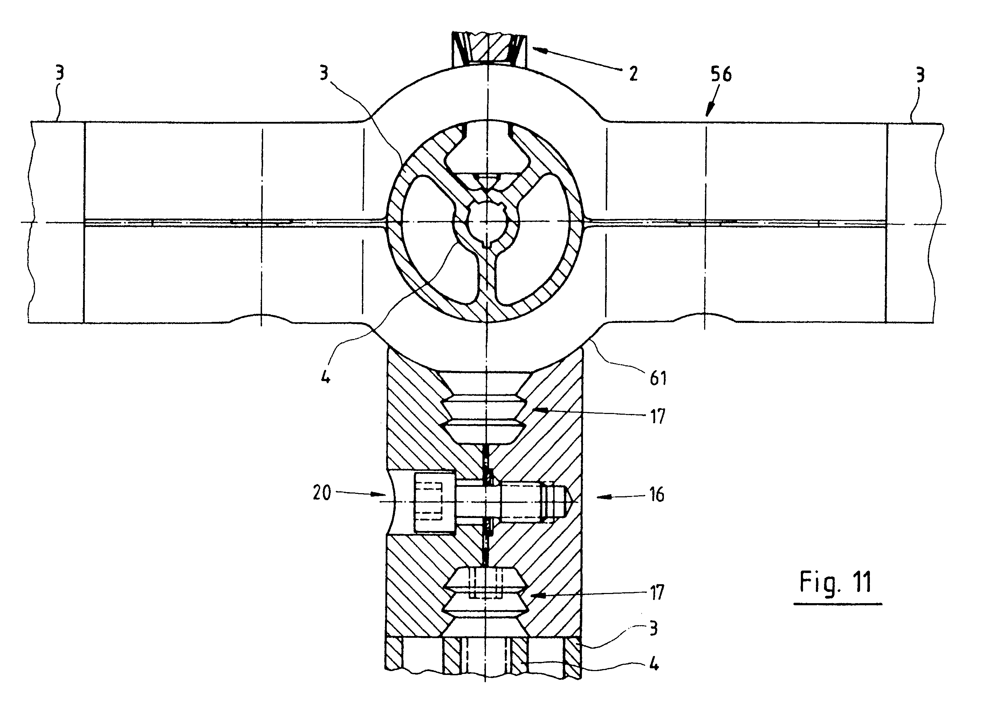

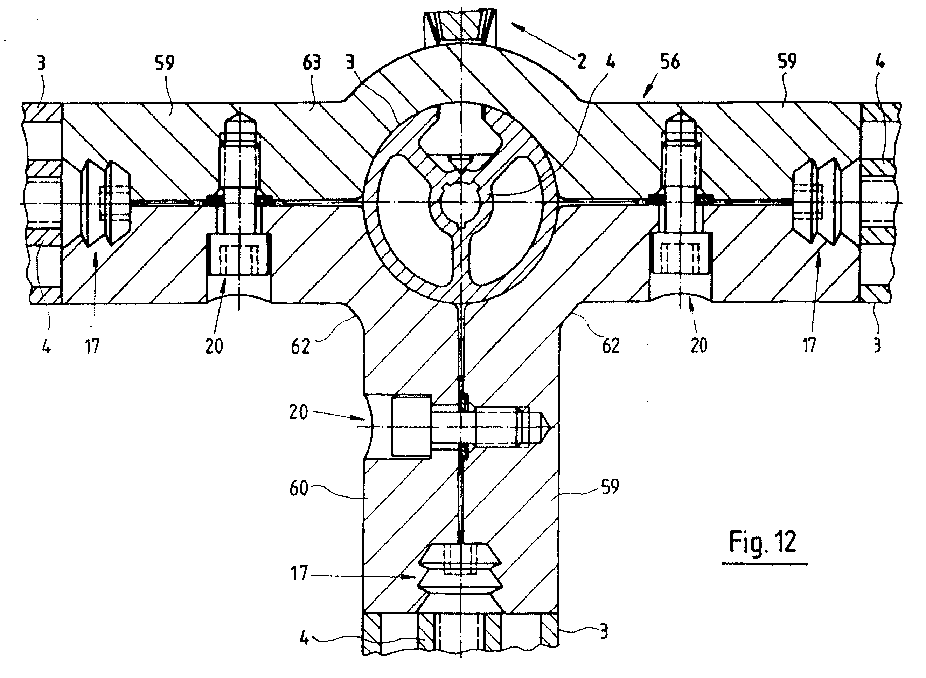

Das Halbkreisverbinderelement 2 besitzt an seiner geraden Seite eine mittige, bogenförmige Aussparung 55. Durch diese Aussparung 55 ist, wie es in den Fig. 7 und 8 dargestellt ist, eine das Rohr 3, an dem das Halbkreisverbinderelement 2 befestigt ist, umgreifende Rohrschelle 56, an deren freiem Ende ein weiteres Rohr 3 stirnseitig angeschlossen ist, hindurchgeführt. Jede Rohrschellen-Hälfte 57, 58 geht einstückig in eine Klemmbacke 59, 60 über. Die beiden Klemmbacken 59, 60 sind durch eine Schraubverbindung 20 miteinander gekoppelt. In die Innenseiten der gegenüberliegenden Klemmbakken 59, 60 sind endseitig umlaufende Nuten 19 für die Aufnahme der Rastnasen und eine Einsteck-Öffnung 26 für den Steckbereich 25 des mittels des Gewindezapfens 28 in den Kanal 4 des Rohres 3 eingedrehten Anschlußteils 17. Die Rohrschelle 56 läßt sich unter beliebigem Winkel zu dem Halbkreisverbinderelement 2 an dem das Halbkreisverbinderelement 2 tragenden Rohr 3 befestigen. Die Fig. 9 und 10 zeigen eine alternative Rohrschelle 56 mit zwei gegenüberliegenden, jeweils durch eine Schraubverbindung 20 gekoppelten Klemmbacken-Paaren 59, 60 an die jeweils stirnseitig über ein Anschlußteil 17 ein Rohr 3 angeschlossen ist. Bei der in Fig. 11 gezeigten Darstellung ist in die bogenförmige Außenseite 61 der Rohrschelle 56, die der Ausführung der Rohrschelle nach Fig. 10 entspricht, mittig ein Anschlußteil 17 eingedreht, das über eine Klemmeinrichtung 16 mit dem stirnseitig in den Kanal 4 eines Rohres 3 eingesetzten Anschlußteil 17 verbunden ist. Eine weitere alternative Ausführungsform der Rohrschelle 56 ist in Fig. 12 dargestellt. In diesem Falle umfaßt die Rohrschelle 56 drei um 90° zueinander versetzt angeordnete, jeweils durch eine Schraubverbindung 20 gekoppelte Klemmbacken-Paare 59, 60, wobei die Rohrschelle 56 selbst nur zwei winkelförmige Einzelteile 62 und ein gerades Einzelteil 63 umfaßt. An jedem Klemmbacken-Paar 59, 60 der Rohrschelle 56 ist stirnseitig über ein Anschlußteil 17 ein Rohr 3 angeschlossen.

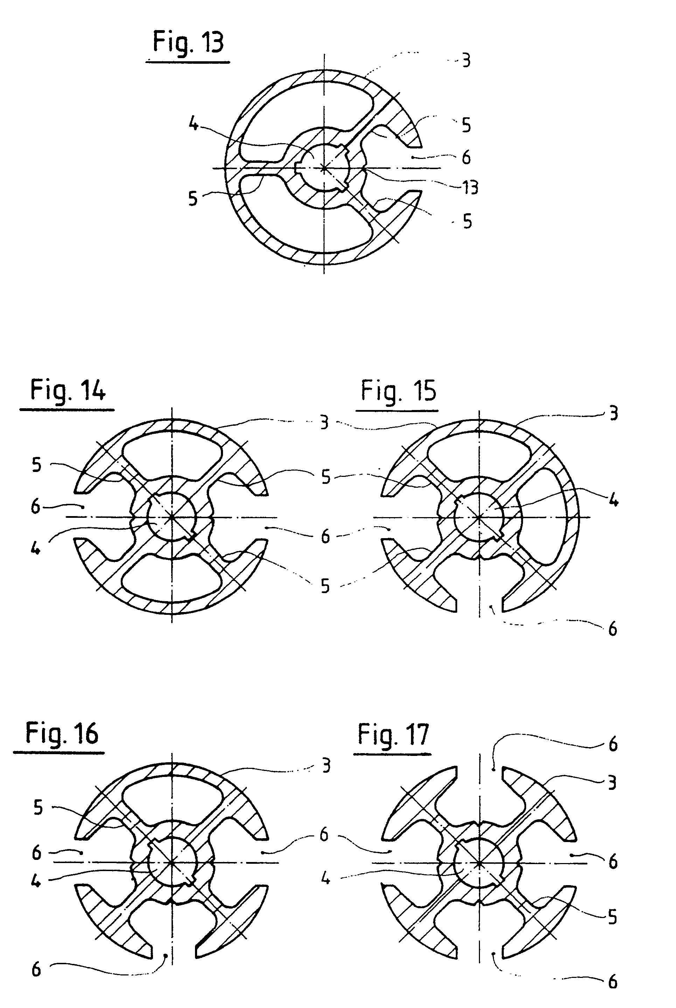

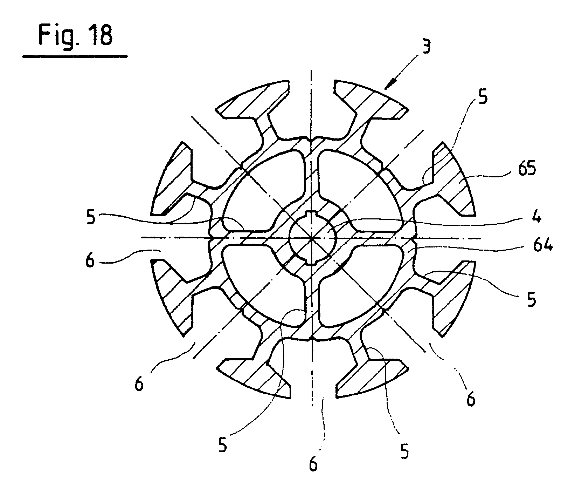

Neben der in Fig. 13 dargestellten Querschnittsform eines Rohres 3 mit einer Längsnut 6 zur Aufnahme eines oder mehreren Halbkreisverbinderelemente 2 ist es auch möglich, das Rohr 3 mit mehreren Längsnuten 6 zu versehen, um an dem Rohr 3 winkelversetzt zueinanderliegende Halbkreisverbinderelemente 2 anbringen zu können. Bei den in den Fig. 14 bis 17 gezeigten, möglichen Querschnittsformen des Rohres 3 ist der mittige Kanal 4 durch vier um 90° zueinander versetzt angeordneten Stege 5 in seiner Position gehalten. In das Rohr 3 nach Fig. 14 sind zwei gegenüberliegende, in das Rohr 3 nach Fig. 15 zwei unter 90° zueinanderliegendende, in das Rohr 3 nach Fig. 16 drei unter 90° zueinanderliegende, jeweils zwischen den entsprechenden Stegen 5 ausgebildete Längsnuten 6 eingelassen. Bei der in Fig. 18 dargestellten, alternativen Querschnittsform des Rohres 3 ist das Rohr 3 als Doppelmantel-Rohr ausgeführt. Bei diesem Rohr 3 sind zwischen dem mittigen Kanal 4 und dem inneren Mantel 64 vier gleichmäßig über den Umfang verteilte Stege 5 angeordnet. Zwischen dem inneren Mantel 64 und dem äußeren Mantel 65 befinden sich acht gleichmäßig über den Umfang verteilte Stege 5. In den äußeren Mantel 65 ist zwischen den diesen tragenden Stegen 5 jeweils eine schwalbenschwanzförmige Längsnut 6 ausgebildet. In einer Querschnittsebene dieses Rohrs 3 können also bis zu acht Halbkreisverbinderelemente 2 angebracht werden.

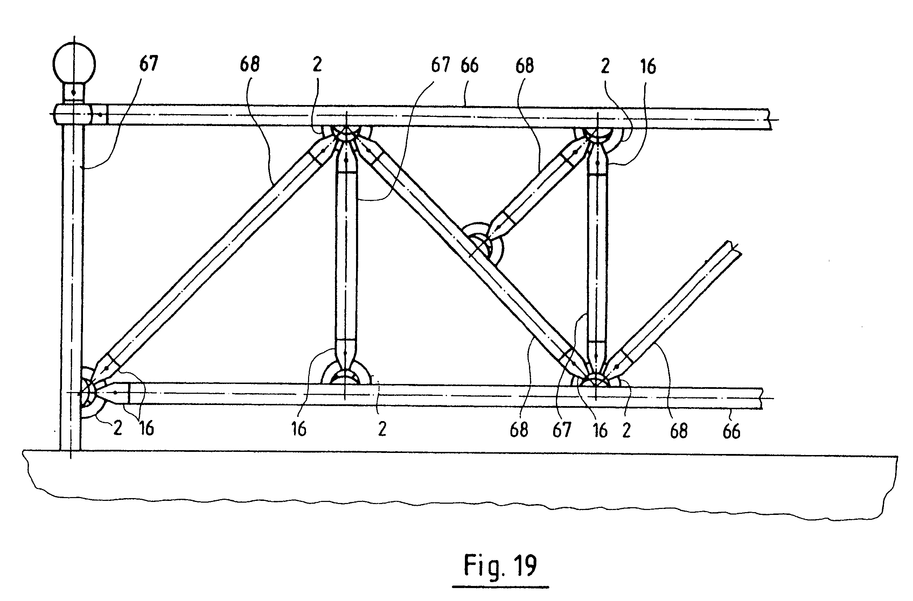

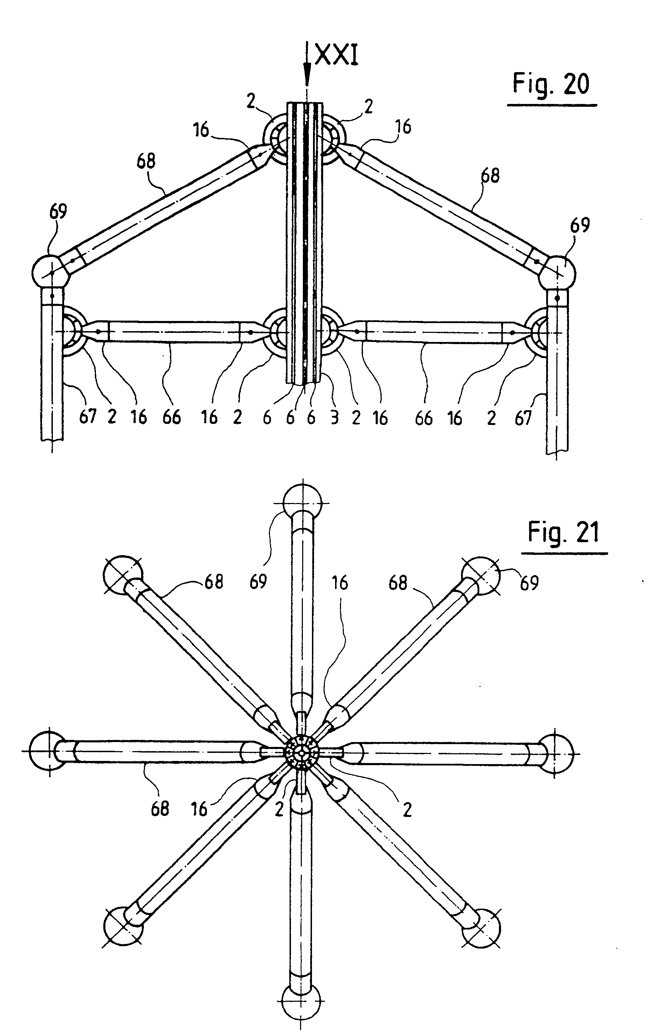

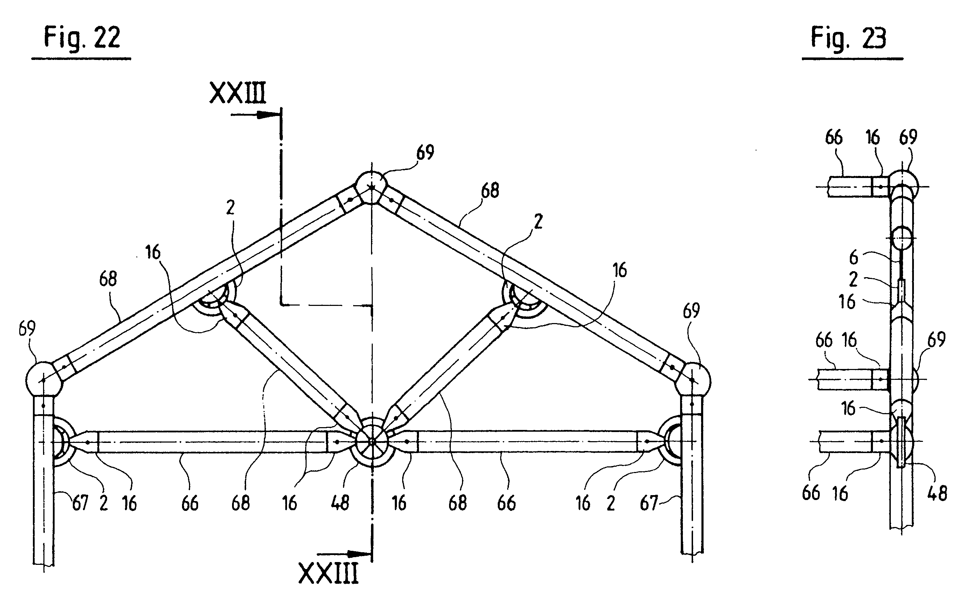

Bei dem in Fig. 19 dargestellten Rohr-Gitterwerk sind die Horizontalstreben 66 über entsprechend angeordnete Halbkreisverbinderelemente 2 und zugehörige Klemmeinrichtungen 16 mit den Vertikalstreben 67 sowie den Querstreben 68 verbunden. Bei dem in den Fig. 20 und 21 gezeigten Ausführungsbeispiel trägt ein zentrales Rohr 3 mit acht Längsnuten 6 an seinem oberen Ende in einer Ebene acht Halbkreisverbinderelemente 2, die über Klemmeinrichtungen 16 mit einer entsprechenden Anzahl abgehender Querstreben 68 verbunden sind. Die anderen Enden der Querstreben 68 sind über gelenkige Kugelverbinder 69 an Vertikalstreben 67 angeschlossen. Unterhalb der Kugelverbinder 69 erstrecken sich Horizontalstreben 66 zwischen dem zentralen Rohr 3 und den Vertikalstreben 67, wobei die Horizontalstreben 66 wiederum durch entsprechend angeordnete Halbkreisverbinderelemente 2 und Klemmeinrichtungen 16 in ihrer Position gehalten sind. Die Horizontalstreben 66 lassen sich aufgrund der erfindungsgemäßen Rohrverbindung ohne Veränderung des Abstandes zwischen dem zentralen Rohr 3 und den Vertikalstreben 67 einbauen. Das in den Fig. 22 und 23 dargestellte Ausführungsbeispiel zeigt einen Ausschnitt einer Rohr-Dachkonstruktion, bei der an einem Vollkreisverbinderelement 48 drei um 90° zueinander versetzt angeordnete Horizontalstreben 66 und zwei Querstreben 68 mit Hilfe von Klemmeinrichtungen 16 angeschlossen sind. Die gegenüberliegenden, an dem Vollkreisverbinderelement 48 angeschlossenen Horizontalstreben 66 sind an ihrem anderen Ende über Klemmeinrichtungen 16 und Halbkreisverbinderelementen 2 mit Vertikalstreben 67 verbunden. Die oberen Enden der Vertikalstreben 67 sind über Kulgelverbinder 69 mit Querstreben 68 und Horizontalstreben 66 verbunden, wobei diese Querstreben 68 in der Ebene des Vollkreisverbinderelementes 48 durch einen weiteren Kulgelverbinder 69 zusammengehalten sind. Von dem diese Querstreben 68 verbindenden Kugelverbinder geht ein den First bildendes Horizontalrohr 66 ab. Die von dem Vollkreisverbinderelement 48 abgehenden Querstreben 68 sind über Klemmeinrichtungen 16 und Halbkreisverbinderlemente 2 an den durch Kugelverbinder 69 zusammengehaltenen Querstreben 68 befestigt.

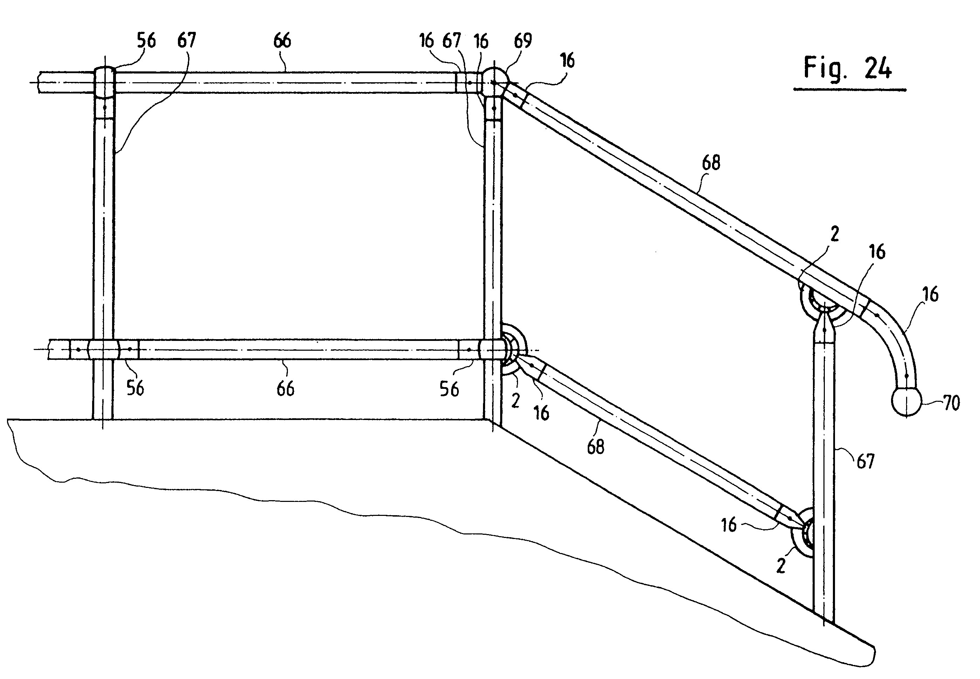

Weiterhin veranschaulicht das in Fig. 24 dargestellte Ausführungsbeispiel ein Treppengeländer bei dem zur Verbindung der Vertikalstreben 67 mit den Querstreben 68 Halbkreisverbinderelemente 2 mit zugehörigen Klemmeinrichtungen 16 zum Einsatz kommen. Die Horizontalstreben 66 sind über entsprechend gestaltete Rohrschellen 56 mit angeformten Klemmeinrichtungen und einen Kugelverbinder 69 mit zugehörigen Klemmeinrichtungen mit den Vertikalstreben 67 verbunden. An das freie Ende der als Handlauf ausgebildeten oberen Querstrebe 68 ist über eine gebogen ausgeführte Klemmeinrichtung 16 eine Kugel 70 angeschlossen.

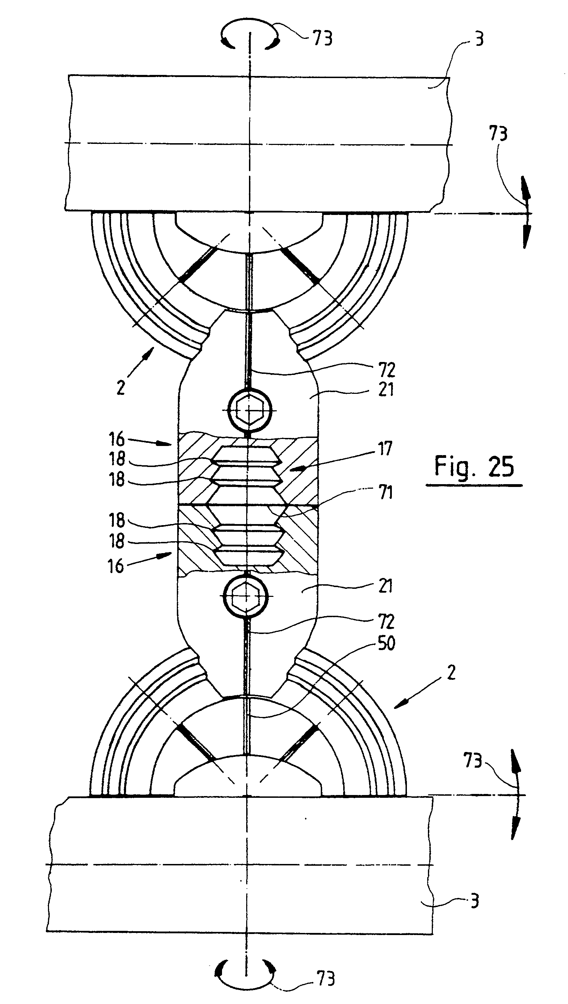

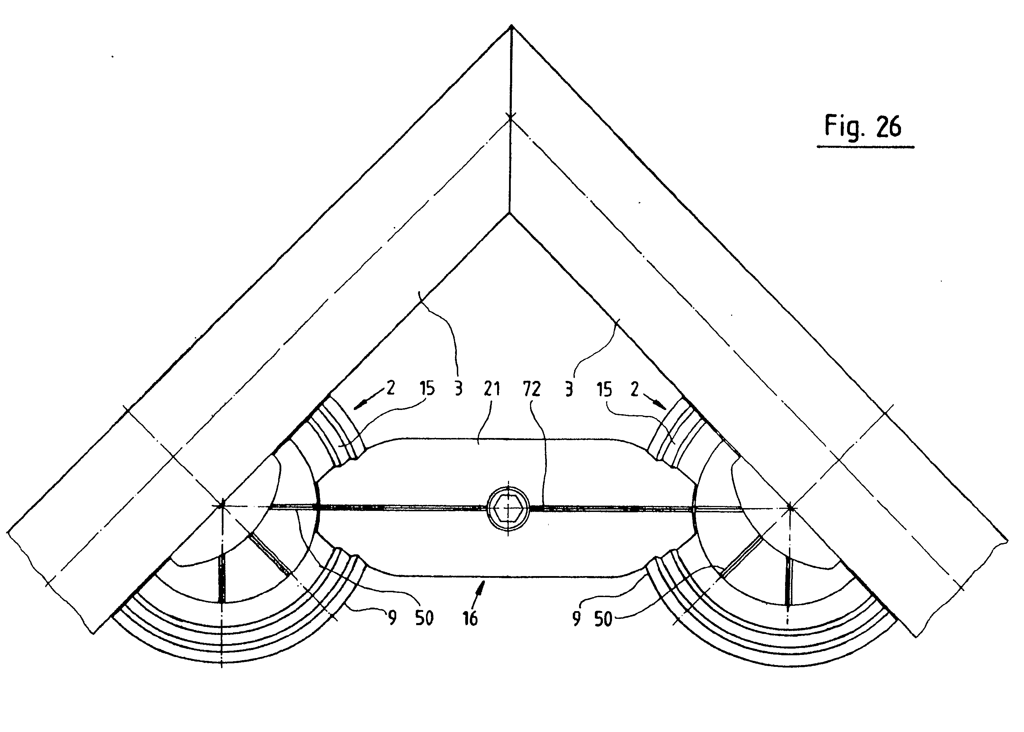

Bei dem in Fig. 25 gezeigten Ausführungsbeispiel tragen zwei Rohre 3 längsseitig je ein Halbkreisverbinderelement 2, die über zwei stirnseitig aneinanderliegende Klemmeinrichtungen 16 miteinander verbunden sind. Diese Klemmeinrichtungen 16 sind über ein Anschlußteil 17 gekoppelt, das als zu seiner Querachse 71 spiegelsymmetrischer Körper mit außenliegenden Rastnasen 18 und innenliegenden Steckbereichen 25 ausgebildet ist, denen entsprechende Nuten in den Klemmbacken 21, 22 der Klemmeinrichtungen 16 zugeordnet sind. In der Ebene der Schraubverbindungen 20 der Klemmeinrichtungen 16 verlaufen außenseitig auf diesen Markierungslinien 72. Die Pfeile 73 geben die möglichen Verschwenk- bzw. Verdrehrichtungen dieser Rohrverbindung an. Bei dem analog zu der Rohrverbindung nach Fig. 25 dargestellten Ausführungsbeispiel gemäß Fig. 26 sind die beiden Halbkreisverbinder 2 durch eine speziell ausgebildete Klemmeinrichtung 16 miteinander gekoppelt, die lediglich an ihren Endseiten in den Klemmbacken 21, 22, welche durch eine Schraubverbindung 20 zusammengehalten sind, Ausformungen 34 für die Aufnahme der Verzahnungen 15 der Ansätze 9 der Halbkreisverbinderelemente 2 besitzt.

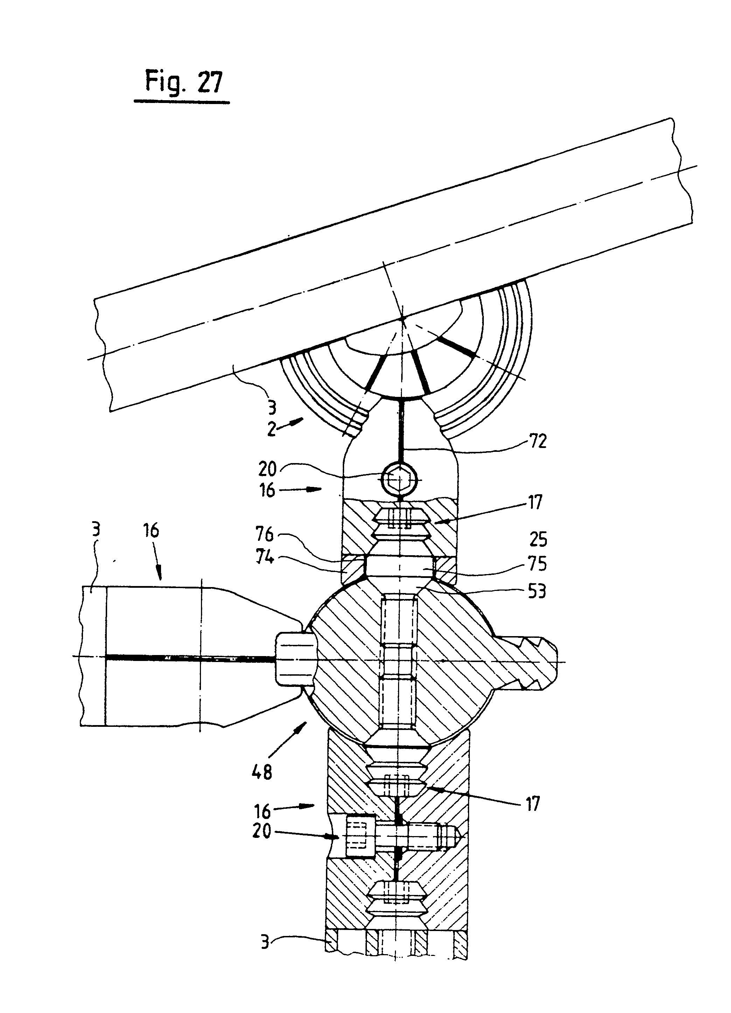

Das in Fig. 27 dargestellte Ausführungsbeispiel veranschaulicht den stirnseitigen Anschluß zweier Rohre 3 und den längsseitigen Anschluß eines Rohres 3 an ein Vollkreisverbinderelement 48. Die stirnseitigen Rohranschlüsse erfolgen unmittelbar jeweils über eine Klemmeinrichtung 16, während der längsseitige Rohranschluß über ein an dem Rohr 3 befestigtes Halbkreisverbinderelement 2, eine Klemmeinrichtung 16 und eine Zwischenscheibe 74 erfolgt. Die Zwischenscheibe 74 dient dazu, die unterschiedlichen Konturen zwischen der Außenseite des Vollkreisverbinderelementes 48 und der Stirnseite der Klemmeinrichtung 16 auszugleichen. Zu diesem Zweck ist die dem Vollkreisverbinderelement 48 zugewandte Seite der Zwischenscheibe 74 konkav und die der Stirnseite der Klemmeinrichtung 16 zugewandte Seite der Zwischenscheibe 74 plan ausgeführt. Demzufolge besitzt in diesem Falle das Anschlußteil 17 zwischen seinem Steckbereich 25 und seinem Konus 53 einen zylinderförmigen Abschnitt 75, der in seinen Abmessungen der Durchgangsbohrung 76 der Zwischenscheibe 74 angepaßt ist. Selbstverständlich kann die Zwischenscheibe 74 auch bei anderen Rohranschlüssen zur Anwendung kommen.

Die beschriebenen Ausführungsbeispiele zeigen die besonders einfache und praktisch zu handhabende Konstruktion der erfindungsgemäßen Rohrverbindung, deren Einzelbauteile aus Aluminium bestehen und die sich unbeschadet ihrer Einfachheit gleichwohl als besonders zuverlässig und variabel erweist.

**Patentansprüche**

1. Rohrverbindung zur Bildung eines Knotenpunktes aus mehreren, mittig einen längsverlaufenden Kanal (4) aufweisenden Rohren (3), bei der jedes Rohr (3) mit einem von der Stirnseite her in den Kanal (4) eingesetzten Anschlußteil (17) versehen ist, das jeweils über eine aus zwei gegenüberliegenden, durch eine Schraubverbindung (20) zusammengehaltene Klemmbacken (21, 22) bestehende Klemmeinrichtung (16) mit einem scheibenförmigen, einen Ansatz aufweisenden Verbinderelement (1) gekoppelt ist, dadurch gekennzeichnet, daß sich der Ansatz (9) über den Umfang des Verbinderelementes (1) erstreckt, und sämtliche Klemmeinrichtungen (16) an den Ansatz (9) angreifen.

2. Rohrverbindung nach Anspruch 1, dadurch gekennzeichnet, daß das Verbinderelement (1) als scheibenförmiges Halbkreis-Verbinderelement (2) ausgebildet ist.

3. Rohrverbindung nach den Ansprüchen 1 und 2, dadurch gekennzeichnet, daß das freie Ende des Anschlußteils (17) mit zwei übereinanderliegenden, umlaufenden Rastnasen (18) versehen ist, die in entsprechend geformte, umlaufende Nuten (19) in den gegenüberliegenden Innenseiten der Klemmbacken (21, 22) der Klemmeinrichtung (16) eingreifen, daß der kreisbogenförmige Ansatz (9) des Halbkreis- (2) bzw. Vollkreisverbinderelementes (48) auf jeder Längsseite mit einer aus zwei Zähnen (14) bestehenden, durchgehenden Verzahnung (15) versehen ist, die in entsprechende, durchgehende Ausformungen (34) in den Innenseiten der Klemmbacken (21, 22) der Klemmeinrichtung (16) eingreifen, und daß die Klemmbacken (21, 22) der Klemmeinrichtung (16) mit dem Anschlußteil (17) und dem Ansatz (9) des Halbkreis- (2) bzw. Vollkreisverbinderelementes (48) durch die Schraubverbindung (20) verspannbar sind.

4. Rohrverbindung nach den Ansprüchen 1 bis 3, dadurch gekennzeichnet, daß die Rastnasen (18) des Anschlußteils (17) im Querschnitt kegelstumpfförmig ausgebildet und an ihrer Breitseite jeweils mit einer schräg verlaufenden Hinterschneidung (23) versehen sind, die hinter einen entsprechenden Absatz (24) der zugehörigen, umlaufenden Nut (19) in den Klemmbacken (21, 22) der Klemmeinrichtung (16) eingreifen.

5. Rohrverbindung nach den Ansprüchen 1 bis 4, dadurch gekennzeichnet, daß die Hinterschneidung (23) der innenliegenden Rastnase (18) des Anschlußteils (17) in einen kegelstumpfförmigen Steckbereich (25) übergeht, wobei in die Innenseiten der Klemmbacken (21, 22) der Klemmeinrichtung (16) eine dementsprechend kegelstumpfförmig ausgebildete Einsteck-Öffnung (26) eingelassen ist.

6. Rohrverbindung nach den Ansprüchen 1 bis 5, dadurch gekennzeichnet, daß der Steckbereich (25) des Anschlußteils (17) mittig unter Bildung einer umlaufenden Schulter (27), die an der Stirnseite des Kanals (4) des Rohres (3) anliegt, in einen in den Kanal (4) des Rohres (3) eingreifenden Gewindezapfen (28) übergeht.

7. Rohrverbindung nach den Ansprüchen 1 bis 6, dadurch gekennzeichnet, daß der Gewindezapfen (28) des Anschlußteils (17) mit einem selbstschneidenden Gewinde versehen ist, und daß in die Stirnseite der außenliegenden Rastnase (18) des Anschlußteils (17) ein Innensechskant-Sackloch (30) eingelassen ist.

8. Rohrverbindung nach den Ansprüchen 1 bis 7, dadurch gekennzeichnet, daß die Klemmeinrichtung (16) einen zylindrischen Bereich (31), dessen Stirnseite an der Stirnseite der Wandung des Rohres (3) anliegt, und einen konischen Bereich (32), dessen Stirnseite unter kreisbogenförmiger Ausgestaltung an der Außenseite (33) des Halbkreis- (2) bzw. Vollkreisverbinderelementes (48) anliegt, umfaßt.

9. Rohrverbinder nach den Ansprüchen 1 bis 8, dadurch gekennzeichnet, daß die sich durch den zylindrischen Bereich (31) der Klemmeinrichtung (16) erstreckende Schraubverbindung (20) der beiden Klemmbacken (21, 22) aus einer Innensechskantschraube (37) besteht, deren Kopf (40) sich in einer Schraubenkopfaufnahme (38) der einen Klemmbacke (21) abstützt und deren Gewindezapfen (44) in eine Gewindebohrung (43) der anderen Klemmbacke (22) eingreift.

10. Rohrverbindung nach den Ansprüchen 1 bis 9, dadurch gekennzeichnet, daß auf dem zwischen Schraubenkopf (40) und Gewindezapfen (44) vorgesehenen Schaft (42) der Innensechskantschraube (37) lose eine Haltescheibe (45) angeordnet ist, die in eine entsprechende Aussparung (46) in der Innenseite der den Gewindezapfen (44) aufnehmenden Klemmbacke (22) eingreift.

11. Rohrverbindung nach den Ansprüchen 1 bis 10, dadurch gekennzeichnet, daß der Ansatz (9) des Halbkreis- (2) bzw. Vollkreisverbinderelementes (48) von der Außenseite (33) desselben her bis zu seiner Verzahnung (15) mit einem im Querschnitt konusförmigen Steckbereich (35) versehen ist, dem eine entsprechend geformte, konusförmige Einsteck-Öffnung (36) in den Innenseiten der Klemmbacken (21, 22) der Klemmeinrichtung (16) zugeordnet ist.

12. Rohrverbindung nach den Ansprüchen 1 bis 11, dadurch gekennzeichnet, daß das Halbkreis- (2) bzw. Vollkreisverbinderelement (48) auf seinen Seitenflächen (49) mit unter 45° zueinander verlaufenden Markierungsnuten (50) versehen ist.

13. Rohrverbindung nach den Ansprüchen 1 bis 12, dadurch gekennzeichnet, daß das Halbkreisverbinderelement (2) an seiner geraden Seite endseitig schwalbenschwanzförmige Füße (8) besitzt, die in eine dazu korrespondierend ausgebildete Längsnut (6) eines mit einem mittigen Kanal (4) versehenen Rohres (3) eingreifen, und daß das Halbkreisverbinderelement (2) mittels sich durch die Füße (8) und den Ansatz (9) erstreckender Madenschrauben (10) mit dem Rohr (3) verspannt ist.

14. Rohrverbindung nach den Ansprüchen 1 bis 13, dadurch gekennzeichnet, daß die Längsnut (6) des Rohres (3) zwischen zwei von drei Stegen (5), die den mittigen Kanal (4) des Rohres (3) in seiner Lage halten, ausgebildet ist.

15. Rohrverbindung nach den Ansprüchen 1 bis 13, dadurch gekennzeichnet, daß der mittige Kanal (4) des Rohres (3) durch vier um 90° zueinander versetzt angeordnete Stege (5) in seiner Position gehalten ist, und daß das Rohr (3) mit zwei gegenüberliegenden oder mit zwei um 90° versetzt liegenden oder mit drei oder vier zueinander um 90° versetzt angeordneten Längsnuten (6) versehen ist.

16. Rohrverbindung nach den Ansprüchen 1 bis 13, dadurch gekennzeichnet, daß das Rohr (3) als Doppelmantel-Rohr ausgeführt ist, bei dem sich zwischen dem mittigen Kanal (4) und dem inneren Mantel (64) vier gleichmäßig über den Umfang verteilte Stege (5) und zwischen dem inneren Mantel (64) und dem äußeren Mantel (65) acht gleichmäßig über den Umfang verteilte Stege (5) erstrecken, wobei in den äußeren Mantel (65) zwischen den diesen tragenden Stegen (5) jeweils eine schwalbenschwanzförmige Längsnut (6) eingelassen ist.

17. Rohrverbindung nach den Ansprüchen 1 bis 16, dadurch gekennzeichnet, daß in den Boden (12) jeder Längsnut (6) mittig zu dem Öffnungsspalt (7) der Längsnut (6) eine längs verlaufende Rille (13) eingelassen ist, in die die Spitzen (11) der Madenschrauben (10) des Halbkreisverbinderelementes (2) eingreifen.

18. Rohrverbindung nach den Ansprüchen 1 bis 17, dadurch gekennzeichnet, daß das Halbkreisverbinderelement (2) an seiner geraden Seite mittig eine Aussparung (55) aufweist, durch die eine das Rohr (3), das über seine Längsnut (6) mit dem Halbkreisverbinderelement (2) verspannt ist, umgreifende Rohrschelle (56) hindurchgeführt ist, und daß die Rohrschellen-Hälften (57, 58) einstückig in durch eine Schraubverbindung (20) gekoppelte Klemmbacken (59, 60) übergehen, deren gegenüberliegende Innenseiten endseitig mit entsprechend umlaufenden Nuten (19) für die Aufnahme eines stirnseitig in den mittigen Kanal (4) eines weiteren Rohres (3) eingesetzten Anschlußteils (17) versehen sind.

19. Rohrverbindung nach Anspruch 18, dadurch gekennzeichnet, daß die Rohrschelle (56) zwei gegenüberliegende, jeweils durch eine Schraubverbindung (20) gekoppelte Klemmbacken-Paare (59, 60) für den jeweils stirnseitigen Anschluß eines Rohres (3) besitzt.

20. Rohrverbindung nach Anspruch 18, dadurch gekennzeichnet, daß die Rohrschelle (56) drei um 90° zueinander versetzt angeordnete, jeweils durch eine Schraubverbindung (20) gekoppelte Klemmbacken-Paare (59, 60) für den jeweils stirnseitigen Anschluß eines Rohres (3) umfaßt.

21. Rohrverbindung nach den Ansprüchen 1 bis 20, dadurch gekennzeichnet, daß in die bogenförmige Außenseite (61) der Rohrschelle (56) mittig ein Anschlußteil (17) eingesetzt ist, das über eine Klemmeinrichtung (16) mit dem stirnseitig in den mittigen Kanal (4) eines weiteren Rohres (3) eingesetzten Anschlußteil (17) verbunden ist.

22. Rohrverbindung nach den Ansprüchen 1 bis 12, dadurch gekennzeichnet, daß die Seitenflächen (49) des Vollkreisverbinderelementes (48) ballig ausgeführt und mit einer oder mehreren, zum Mittelpunkt des Vollkreisverbinderelementes (48) hin gerichteten Gewindebohrungen (51) versehen sind, in die Anschlußteile (17) eingesetzt sind, die jeweils über eine Klemmeinrichtung (16) mit einem stirnseitig in den mittigen Kanal (4) eines weiteren Rohres (3) eingesetzten Anschlußteil (17) verbunden sind.

23. Rohrverbindung nach dem Anspruch 22, dadurch gekennzeichnet, daß die in die Seitenflächen (49) des Vollkreisverbinderelementes (48) eingesetzten Anschlußteile (17) zwischen dem Steckbereich (25) und dem Gewindezapfen (28) einen Konus (53) aufweisen, der in eine entsprechende Senkung (54) der zugehörigen Gewindebohrung (51) des Vollkreisverbinderelementes (48) eingreift.

24. Rohrverbindung nach den Ansprüchen 22 und 23, dadurch gekennzeichnet, daß die nicht benötigten Gewindebohrungen (51) des Vollkreisverbinderelementes (48) durch einen Blindstopfen (52) verschlossen sind.

**Claims**

1. Pipe joint for forming a junction of a plurality of pipes (3) provided centrally with a longitudinally extending channel (4), wherein each pipe (3) is provided with a connecting member (17), which is inserted from the frontal face into the channel (4) and is connected to a disc-shaped connecting element (1), having an extension, via a respective clamping device (16) composed of two oppositely disposed clamping jaws (21, 22), which are held together by a screw connection (20), characterised in that the extension (9) extends over the periphery of the connecting element (1), and all of the clamping devices (16) engage with the extension (9).

2. Pipe joint according to claim 1, characterised in that the connecting element (1) is configured as a disc-shaped semicircular connecting element (2).

3. Pipe joint according to claims 1 and 2, characterised in that the free end of the connecting member (17) is provided with two superposed, continuous detent tabs (18), which engage in correspondingly shaped, continuous grooves (19) in the oppositely disposed interior faces of the clamping jaws (21, 22) of the clamping device (16), in that the arcuate extension (9) of the semicircular connecting element (2) and of the fully circular connecting element (48) is provided on each longitudinal side with a continuous toothing (15), composed of two teeth (14), which engage in corresponding continuous recesses (34) in the interior faces of the clamping jaws (21, 22) of the clamping device (16), and in that the clamping jaws (21,22) of the clamping device (16) can be clamped to the connecting member (17) and the extension (9) of the semicircular connecting element (2) and the fully circular connecting element (48) by means of the screw connection (20).

4. Pipe joint according to claims 1 to 3, characterised in that the detent tabs (18) of the connecting member (17) have a frustoconical cross-sectional configuration and are each provided with a sloping undercut (23) at their broadsides, with said undercuts engaging behind a corresponding step (24) in the associated continuous groove (19) in the clamping jaws (21, 22) of the clamping device (16).

5. Pipe joint according to claims 1 to 4, characterised in that the undercut (23) of the interior detent tab (18) of the connecting member (17) changes to a frustoconical plug-in region (25), with a correspondingly frustoconically configured insertion opening (26) being provided in the interior faces of the clamping jaws (21, 22) of the clamping device (16).

6. Pipe joint according to claims 1 to 5, characterised in that the plug-in region (25) of the connecting member (17), while forming a continuous shoulder (27) which lies against the frontal face of the channel (4) of the pipe (3), changes centrally into a threaded stem (28) which engages in the channel (4) of the pipe (3).

7. Pipe joint according to claims 1 to 6, characterised in that the threaded stem (28) of the connecting member (17) is provided with a self-cutting thread, and in that a hexagonally configured blind bore (30) is provided in the frontal face of the exterior detent tab (18) of the connecting member (17).

8. Pipe joint according to claims 1 to 7, characterised in that the clamping device (16) includes a cylindrical region (31), whose frontal face lies against the frontal face of the wall of the pipe (3), and a conical region (32), whose frontal face has an arcuate configuration and lies against the exterior face (33) of the semicircular connecting element (2) and of the fully circular connecting element (48), respectively.

9. Pipe connector according to claims 1 to 8, characterised in that the screw connection (20) for the two clamping jaws (21, 22), extending through the cylindrical region (31) of the clamping device (16), is composed of a hexagonal socket screw (37), whose head (40) is supported in a screw head receptacle (38) of the one clamping jaw (21), and whose threaded stem (44) engages in a threaded bore (43) of the other clamping jaw (22).

10. Pipe joint according to claims 1 to 9, characterised in that a holding disc (45) is disposed loosely on the shaft (42), provided between screw head (40) and threaded stem (44), of the hexagonal socket screw (37) and engages in a corresponding recess (46) in the interior face of the clamping jaw (22) accommodating the threaded stem (44).

11. Pipe joint according to claims 1 to 10, characterised in that the extension (9) of the semicircular connecting element (2) and of the fully circular connecting element (48), respectively, is provided with a plug-in region (35), having a conical cross-section and extending from its exterior (33) to its toothing (15), and with an associated; correspondingly shaped, conical insertion opening (36) disposed in the interior faces of the clamping jars (21, 22) of the clamping device (16).

12. Pipe joint according to claims 1 to 11, characterised in that the side faces (49) of the semicircular connecting element (2) and the fully circular connecting element (48) are provided with marking grooves (50) which converge towards one another at an angle of 45°.

13. Pipe joint according to claims 1 to 12, characterised in that the end of the straight side of the semicircular connecting element (2) is provided with dovetailed feet (8), which engage in a correspondingly configured longitudinal groove (6) of a pipe (3) having a central channel (4), and in that the semicircular connecting element (2) is clamped to the pipe (3) by means of headless screws (10), which extend through the feet (8) and the extension (9).

14. Pipe joint according to claims 1 to 13, characterised in that the longitudinal groove (6) of the pipe (3) is formed between two of three webs (5), which hold the central channel (4) of the pipe (3) in its position.

15. Pipe joint according to claims 1 to 13, characterised in that the central channel (4) of the pipe (3) is held in its position by four webs (5) arranged offset by 90° relative to one another, and in that the pipe (3) is provided with two oppositely disposed longitudinal grooves (6) or with two 90° offset longitudinal grooves (6) or with three or four mutually 90 ° offset longitudinal grooves (6).

16. Pipe joint according to claims 1 to 13, characterised in that the pipe (3) is configured as a double wall pipe, in which four webs (5), which are distributed uniformly over the circumference, extend between the central channel (4) and the inner wall (64), and eight webs (5), which are uniformly distributed over the circumference, extend between the inner wall (64) and the outer wall (65), with a dovetailed longitudinal groove (6) being formed in the outer wall (65) between the respective webs (5) supporting it.

17. Pique joint according to claims 1 to 16, characterised in a longitudinally extending flute (13) is formed in the bottom (12) of each longitudinal groove (6) centrally relative to the opening gap (7) of the longitudinal groove (6), with the tips (11) of the headless screws (10) of the semicircular connecting element (2) engaging into this flute.

18. Pipe joint according to claims 1 to 17, characterised in that, at its straight side, the semicircular connecting element (2) is provided centrally with a recess (55), through which a pipe clamp (56) passes, which encloses the pipe (3) clamped to the semicircular connecting element (2) by way of its longitudinal groove (6), and in that the pipe clamp halves (57, 58) change in one piece into clamping jaws (59, 60), which are coupled together by means of a screw connection (20) and whose oppositely disposed interior faces are provided at their ends with correspondingly continuous grooves (19) for accommodating a connecting member (17), which is inserted into the end of the central channel (4) of a further pipe (3).

19. Pipe joint according to claim 18, characterised in that the pipe clamp (56) includes two oppositely disposed pairs of clamping jaws (59, 60), which are each coupled together by means of a screw connection (20), for the respective frontal connection of a pipe (3).

20. Pipe joint according to claim 18, characterised in that the pipe clamp (56) includes three mutually 90° offset pairs of clamping jaws (59, 60), which are each coupled together by means of a screw connection (20), for the respective frontal connection of a pipe (3).

21. Pipe joint according to claims 1 to 20, characterised in that a connecting member (17) is inserted centrally into the arcuate exterior face (61) of the pipe clamp (56) and is connected, by way of a clamping device (16), to the connecting member (17) inserted into the end of the central channel (4) of a further pipe (3).

22. Pipe joint according to claims 1 to 12, characterised in that the side faces (49) of the fully circular connecting element (48) are spherical and are provided with one or a plurality of threaded bores (51) orientated towards the centre of the fully circular connecting element (48), with connecting members (17) being inserted into the threaded bores and each being connected, by way of a clamping device (16), to a connecting member (17) inserted into the end of the central channel (4) of a further pipe (3).

23. Pipe joint according to claim 22, characterised in that the connecting members (17), inserted into the lateral faces (49) of the fully circular connecting element (48), are provided with a cone (53) between the plug-in region (25) and the threaded stem (28), with said cone engaging in a corresponding recess (54) of the associated threaded bore (51) of the fully circular connecting element (48).

24. Pipe joint according to claims 22 and 23, characterised in that the threaded bores (51) of the fully circular connecting element (48), which are not needed, are closed by a blind plug (52).

**Revendications**

1. Raccord à tubes pour la formation d'un point nodal de plusieurs tubes (3) présentant centralement un canal longitudinal (4), sur lequel chaque tube (3) est muni d'une pièce de jonction (17) insérée dans le canal (4) depuis son côté frontal, qui est accouplée chaque fois à un élément de liaison en forme de disque (1) comprenant une embase par l'intermédiaire d'un dispositif de serrage (16) constitué de deux mâchoires de serrage opposées (21, 22) maintenues ensemble par un assemblage vissé (20), caractérisé en ce que l'embase (9) s'étend au-dessus de la périphérie de l'élément de liaison (1) et en ce que tous les dispositifs de serrage (16) s'engagent sur l'embase (9).

2. Raccord à tubes selon la revendication 1, caractérisé en ce que l'élément de liaison (1) est conçu comme un élément de liaison semi-circulaire en forme de disque (2).

3. Raccord à tubes selon les revendications 1 et 2, caractérisé en ce que l'extrémité libre de la pièce de jonction (17) est munie de deux taquets d'arrêt (18) superposés, qui s'engagent dans des rainures tournantes formées de façon correspondante dans les côtés intérieurs opposés des mâchoires de serrage (21, 22) du dispositif de serrage (16), en ce que l'embase en forme d'arc de cercle (9) de l'élément de liaison semi-circulaire (2) ou circulaire (48) est munie sur chaque côté longitudinal d'une denture continue (15) constituée de deux dents (14) qui s'engagent dans des évidements continus (34) correspondants dans les côtés intérieurs des mâchoires de serrage (21, 22) du dispositif de serrage (16), et en ce que les mâchoires de serrage (21, 22) du dispositif de serrage (16) peuvent être tendues avec la pièce de jonction (17) et l'embase (9) de l'élément de liaison semi-circulaire (2) ou circulaire (48) par l'assemblage vissé (20).

4. Raccord à tubes selon les revendications 1 à 3, caractérisé en ce que les taquets d'arrêt (18) de la pièce de jonction (17) sont conçus de section tronconique et munis sur chaque largeur d'une contre-dépouille oblique (23) qui s'engage derrière un décrochement correspondant (24) de la rainure tournante s'y rapportant (19) dans les mâchoires de serrage (21, 22) du dispositif de serrage (16).

5. Raccord à tubes selon les revendications 1 à 4, caractérisé en ce que la contre-dépouille (23) du taquet d'arrêt (18) intérieur de la pièce de jonction (17) passe dans une zone d'emboîtement tronconique (25), une ouverture d'emboîtement conçue conformément tronconique (26) étant pratiquée dans les côtés intérieurs des mâchoires de serrage (21, 22) du dispositif de serrage (16).

6. Raccord à tubes selon les revendications 1 à 5, caractérisé en ce que la zone d'emboîtement (25) de la pièce de jonction (17) passe centralement, en formant un épaulement tournant (27) qui s'appuie au côté frontal du canal (4) du tube (3), dans une goupille filetée (28) s'engageant dans le canal (4) du tube (3).

7. Raccord à tubes selon les revendications 1 à 6, caractérisé en ce que la goupille filetée (28) de la pièce de jonction (17) est munie d'un filetage autotaraudeur et en ce qu'un trou borgne à six pans creux (30) est pratiqué dans le côté frontal du taquet d'arrêt (18) extérieur.

8. Raccord à tubes selon les revendications 1 à 7, caractérisé en ce que le dispositif de serrage (16) comprend une zone cylindrique (31) dont le côté frontal s'appuie au côté frontal de la paroi du tube (3) et une zone conique (32) dont le côté frontal s'appuie moyennant une configuration en forme d'arc de cercle au côté extérieur (33) de l'élément semi-circulaire (2) ou circulaire (48).

9. Raccord à tubes selon les revendications 1 à 8, caractérisé en ce que l'assemblage vissé (20) des deux mâchoires de serrage (21, 22) s'étendant à travers la zone cylindrique (31) du dispositif de serrage (16) est constitué d'une vis à six pans creux (37) dont la tête (40) est soutenue dans un logement de tête de vis (38) de l'une des mâchoires de serrage (21) et dont la goupille filetée (44) s'engage dans un perçage taraudé (43) de l'autre mâchoire de serrage (22).

10. Raccord à tubes selon les revendications 1 à 9, caractérisé en ce que sur la tige (42) prévue entre la tête de vis (40) et la goupille filetée (44) de la vis à six pans creux (37) est disposé librement un disque de retenue (45) qui s'engage dans une encoche correspondante (46) dans le côté intérieur de la mâchoire de serrage (22) logeant la goupille filetée (44).

11. Raccord à tubes selon les revendications 1 à 10, caractérisé en ce que l'embase (9) de l'élément de liaison semi-circulaire (2) ou circulaire (48) est munie depuis le côté extérieur de celui-ci (33) jusqu'à sa denture (15) d'une zone d'emboîtement de section tronconique (35) à laquelle est associée une ouverture d'emboîtement conique (36) formée de façon correspondante dans les côtés intérieurs des mâchoires de serrage (21, 22) du dispositif de serrage (16).

12. Raccord à tubes selon les revendications 1 à 11, caractérisé en ce que l'élément de liaison semi-circulaire (2) ou circulaire (48) est muni sur ses surfaces latérales (49) de rainures de repérage (50) disposées à 45 ° les unes des autres.

13. Raccord à tubes selon les revendications 1 à 12, caractérisé en ce que l'élément de liaison semi-circulaire (2) possède sur son côté rectiligne des pieds à l'extrémité en forme de queue d'aronde (8) qui s'engagent dans une rainure longitudinale (6) formée de façon correspondante d'un tube (3) muni d'un canal central (4) et en ce que l'élément de liaison semi-circulaire (2) est tendu avec le tube au moyen de vis sans tête (10) s'étendant à travers les pieds (8) et l'embase (9).

14. Raccord à tubes selon les revendications 1 à 13, caractérisé en ce que la rainure longitudinale (6) du tube (3) est prévue entre deux de trois entretoises (5) qui maintiennent le canal central (4) du tube (3) dans sa position.

15. Raccord à tubes selon les revendications 1 à 13, caractérisé en ce que le canal central (4) du tube (3) est maintenu dans sa position par quatre entretoises (5) disposées décalées de 90° les unes des autres et en ce que le tube (3) est muni de deux rainures longitudinales (6) opposées ou décalées de 90 ° ou bien de trois ou quatre rainures longitudinales décalées de 90 ° les unes des autres.

16. Raccord à tubes selon les revendications 1 à 13, caractérisé en ce que le tube (3) est conçu comme un tube à double enveloppe sur lequel quatre entretoises (5) réparties régulièrement sur la périphérie s'étendent entre le canal central (4) et l'enveloppe intérieure (64) et huit entretoises (5) réparties régulièrement sur la périphérie s'étendent entre l'enveloppe intérieure (64) et l'enveloppe extérieure (65), une rainure longitudinale en forme de queue d'aronde (6) étant pratiquée dans l'enveloppe extérieure (65) entre les entretoises (5) portant celle-ci.

17. Raccord à tubes selon les revendications 1 à 16, caractérisé en ce qu'une gorge longitudinale (13) est pratiquée dans le fond (12) de chaque rainure longitudinale (6) centralement par rapport à la fente d'ouverture (7) de la rainure longitudinale (6), dans laquelle s'engagent les pointes (11) des vis sans tête (10) de l'élément de liaison semi-circulaire (2).

18. Raccord à tubes selon les revendications 1 à 17, caractérisé en ce que l'élément de liaison semi-circulaire (2) présente centralement sur son côté rectiligne une encoche (55) à travers laquelle est conduit un collier de tube (56) s'engageant autour du tube (3) qui est tendu avec l'élément de liaison semi-circulaire (2) par l'intermédiaire de sa rainure longitudinale (6) et en ce que les moitiés de collier (57, 58) passent d'un seul tenant dans des mâchoires de serrage (59, 60) accouplées par un assemblage vissé (20), dont les côtés intérieurs opposés sont munis à l'extrémité de rainures (19) tournant de façon correspondante pour la réception d'une pièce de jonction (17) insérée sur le côté frontal dans le canal central (4) d'un autre tube (3).

19. Raccord à tubes selon la revendication 18 caractérisé en ce que le collier de tube (56) possède deux paires de mâchoires de serrage (59, 60) opposées, dont chacune est accouplée par un assemblage vissé (20) pour le raccordement frontal d'un tube (3).

20. Raccord à tubes selon la revendication 18, caractérisé en ce que le collier de tube (56) comprend trois paires de mâchoires de serrage (59, 60) disposées décalées de 90 ° les unes des autres dont chacune est accouplée par un assemblage vissé (20) pour le raccordement frontal d'un tube (3).

21. Raccord à tubes selon les revendications 1 à 20, caractérisé en ce qu'une pièce de jonction (17) est insérée centralement dans le côté extérieur en forme d'arc de cercle (61) du collier de tube (56), qui est reliée par l'intermédiaire d'un dispositif de serrage (16) à la pièce de jonction (17) insérée sur le côté frontal dans le canal central (4) d'un autre tube (3).

22. Raccord à tubes selon les revendications 1 à 12, caractérisé en ce que les surfaces latérales (49) de l'élément de liaison circulaire (48) conçues convexes et munies d'un ou de plusieurs perçages taraudés (51) orientés vers le point médian de l'élément de liaison circulaire (48) sont insérées dans les pièces de jonction (17) qui sont reliées chacune par l'intermédiaire d'un dispositif de serrage (16) à une pièce de jonction (17) insérée sur le côté frontal dans le canal central (4) d'un autre tube (3).

23. Raccord à tubes selon la revendication 22, caractérisé en ce que les pièces de jonction (17) insérées dans les surfaces latérales (49) de l'élément de liaison circulaire présentent entre la zone d'emboîtement (25) et le goupille filetée (28) un cône (53) qui s'engage dans une inclinaison correspondante (54) du perçage taraudé qui lui est associé (51) de l'élément de liaison circulaire (48).

24. Raccord à tubes selon les revendications 22 et 23, caractérisé en ce que les perçages taraudés (51) non utilisés de l'élément de liaison circulaire (48) sont obturés par un tampon borgne (52).

Fig. 1

Fig. 2

## Fig. 3

Fig. 4

## Fig. 5

## Fig. 6

Fig. 7

Fig. 8

Fig. 9

Fig. 10

EP 0 379 496 B1

Fig. 11

EP 0 379 496 B1

Fig. 12

EP 0 379 496 B1

Fig. 13

Fig. 14

Fig. 15

Fig. 16

Fig. 17

## Fig. 18

Fig. 19

EP 0 379 496 B1

EP 0 379 496 B1

Fig. 20

XXI

Fig. 21

28

Fig. 23

Fig. 22

Fig. 24

73 — 3

73

73

2

72
21

16
18
18

17

71

18
18

16

21

72
50

2

_Fig. 25_

73

73

73

Fig. 26

2  15  3  21  72  3  15  2

9  50  16  9  50

EP 0 379 496 B1

## Fig. 27